# EUROPEAN PATENT SPECIFICATION

(11) **EP 4 275 836 B1**
(45) Date of publication and mention of the grant of the patent: **03.12.2025**
(21) Application number: 23172976.5
(22) Date of filing: 11.05.2023
(51) Int. Cl.: B23Q 1/01, B23Q 1/03, B23Q 3/155, B23Q 3/157, B23Q 39/02, B27M 1/08, B27C 9/04, B23Q 1/62

(54) **WORKPIECE PROCESSING MACHINE OF VARIABLE SIZE AND SHAPE SUCH AS BEAMS, SLABS, PANELS AND THE LIKE, IN PARTICULAR IN WOOD OR THE LIKE**
MASCHINE ZUR BEARBEITUNG VON WERKSTÜCKEN MIT VARIABLEN ABMESSUNGEN UND FORM WIE BALKEN, PLATTEN, PLATTEN UND DERGLEICHEN, INSBESONDERE AUS HOLZ ODER DERGLEICHEN
MACHINE DE TRAITEMENT DE PIÈCES DE DIMENSIONS ET DE FORMES VARIABLES TELLES QUE POUTRES, DALLES, PANNEAUX ET SIMILAIRES, EN PARTICULIER EN BOIS OU SIMILAIRES

(30) Priority: 12.05.2022 IT 202200009857
(43) Date of publication of application: 15.11.2023
(73) Proprietor: Essetre Holding S.r.l., 36016 Thiene (VI) (IT)
(72) Inventor: SELLA, Nicola, 36016 Thiene (VI) (IT)
(74) Representative: Karaghiosoff, Giorgio Alessandro

(56) References cited:
- EP-A1- 2 394 764
- EP-A1- 3 513 934
- US-A- 5 700 117

## Description

The present invention relates to a workpiece processing machine of variable size and shape such as beams, slabs, panels and the like, in particular in wood or similar, which machine comprise:
- at least one machining station comprising at least one gantry supporting at least one processing head, wherein the processing head is movable along at least two mutually non-parallel axes and/or rotatable around at least one or at least two mutually non-parallel axes by means of motorised roto-translating mechanisms;
- a conveyor for feeding at least one workpiece from a loading station to said machining station;
- which conveyor comprises devices for moving a workpiece along a path in a processing direction towards and/or through and/or away from said gantry from it;
- said conveyor comprising a plurality of supporting crossbars of said workpiece which are distributed side by side along said path and which are oriented transversely to said processing direction of said workpiece and are positioned or positionable each at a predetermined distance from the adjacent crossbars;
- said crossbars being movable together or separately from each other along guides extending parallel to said feeding direction by means of actuators for displacing them;
- each crossbar or some of said crossbars being provided with support surfaces for the workpiece(s) being processed;
- each crossbar being provided with at least one positioning stop and/or retaining members of said workpiece with respect to the longitudinal extension of said crossbar, which stop and/or which retaining members are movable respectively in the active position of interference and/or clamping of said workpiece and in the inactive position of interference and/or clamping of said workpiece;
- a control unit being provided to perform a control program wherein instructions are encoded to synchronously control at least said motorised roto-translating mechanisms associated with said at least one processing head, each of said actuators for moving the said crossbars, and/or said positioning stops and/or said workpiece retaining members on said crossbars.

Document IT1270691 by the same applicant relates to a machine of the aforementioned type. In the machine according to the document described, the worktable on which the workpiece is positioned comprises at least two crossbars which can be moved in a direction perpendicular to their longitudinal extension and parallel to each other along a translation guide, which guide extends along a path which passes corresponding to a machining station. A processing head is provided in the machining station which can move and orient itself in space according to different directions of translation and/or rotation. Mounted on each crossbars is one or more heads for holding the workpiece which comprise holding members which cooperate with the workpiece and which in the embodiment shown are of the vacuum type, i.e. suction cup type. Said heads can be moved along the corresponding crossbar in the longitudinal direction of the same and in particular in a direction perpendicular to the direction of movement of the crossbars.

As is evident, the configuration of this machine provides for at least one processing head which can perform machining only on the faces of the workpiece to be machined which are not facing the crossbars, i.e. not facing the worktable. To machine the sides of the workpiece facing the worktable it is necessary in this case to rotate the workpiece with the side facing the worktable into a laterally exposed position, i.e. a position rotated by 90° around an axis parallel to the direction of feed of the workpiece and perpendicular to the direction of the longitudinal extension of the crossbars or in a completely overturned position of 180°, i.e. with the side of the workpiece initially facing the crossbars brought to the position facing upwards. This operation has various drawbacks which consist in the fact that it still requires repositioning of the workpiece on the worktable. In addition to needing a device that allows this workpiece overturning and the dead times introduced in the machining process for the execution of the same, overturning also requires that the workpiece be positioned correctly with respect to the processing head to register the positions of the areas to be worked with those already worked according to the project.

The object of the present invention is to create a machine of the aforementioned type which overcomes the drawbacks of the known machines and which allows machining of the workpiece to be performed preferably in parallel, or simultaneously, both on the freely exposed sides, i.e. not facing the conveyor, or on the crossbars which support said workpiece, both machining on or on the sides in contact with the conveyor, i.e. with the crossbars that make up said conveyor and/or that face them, all without making it necessary to overturn the workpiece to bring it to exposed conditions the sides facing or resting on said crossbars are freely accessible.

Furthermore, the present invention has the object of making this simultaneous machining as rapid and efficient as possible without having to require complex operations for positioning the workpiece and without requiring dead times of the machining processes.

The present invention achieves the above objects with a machine comprising the features set forth in claim 1.

According to a non-limiting embodiment, but particularly simple, the parking station of the processing head comprises a translation guide which is substantially identical to the translation guide provided on said crossbars and which is provided oriented parallel to the translation guide of the respective crossbars and is in position vertically, substantially coincident or aligned, with the translation guide of the crossbar respectively positioned in said machining position, while in said machining position of the crossbar with respect to the parking station, said translation guide associated with the grantry forms an extension of the translation guide provided on said crossbar;
said processing head being mounted on said translation guide of the parking station by means of said cart of said slide and said cart or said slide defining said transferring member of the processing whereby said processing head automatically passes, upon command of the unit control, from said translation guide of the parking station to the translation guide on the crossbar when said crossbar is positioned at said parking station or, at the end of said processing, from said translation guide of the crossbar to the translation guide of the station parking, while during the processing of the workpiece, the processing head may move underneath the support side of the workpiece on the crossbars in order to process the workpiece at said support side.

According to an embodiment, the processing head can be mounted on the cart by means of a roto-translating mechanism of said cart with respect to said crossbar and wherein said mechanism comprises one or more guiding units allowing said processing head to perform relative translating movements with respect to the workpiece to be machined and/or to the crossbar on whose guide it is mounted, according to one or more non-parallel axes of translating and according to one or more axes of rotation which may also partially coincide with at least one of the axes of translating, each translating and/or rotation guide unit being provided with a motorised translating and/or rotation actuator and said roto-translating mechanism being also assembled on the cart or on the slide of the processing head and interposed between said cart and/or said slide and the processing head itself.

According to an advantageous embodiment of the present invention it is envisaged that the translation guide of each crossbar, in combination with the cart or slide associated with the processing head and the motorised actuator for traversing said cart or said slide along the guide defines a guiding unit of the roto-translating mechanism of the processing head for translating the processing head along an axis parallel to the longitudinal direction of the crossbar, during processing.

According to an advantageous embodiment, at least three crossbars are provided which are arranged at predetermined distances from each other and forming the support surface of a workpiece to be machined, the distance between the first and the last of the crossbars being set manually or automatically equal to or smaller than the size of the workpiece to be machined in the translating direction of the crossbars, wherein the workpiece to be machined rests on said at least three crossbars, while the positioning stops and/or the retaining members of the crossbar which is positioned in the machining station and on the guide of which the processing head is present, whereby said crossbar can perform relative traversing movements with respect to the workpiece in the direction transverse to its longitudinal extension, defining the translation guides of the crossbar in the feeding direction of the workpiece with respect to the machining station and the motorised translating actuator of the corresponding crossbar a guiding unit of the roto-translating mechanism of the processing head with respect to the workpiece in an incidental direction, preferably perpendicular to the longitudinal extension of the crossbar.

Said two embodiments can be provided alternatively or in combination with each other, while the roto-translating mechanism provided on the cart or on the slide of the processing head can provide a translation unit of said processing head according to at least one single oriented or orientable axis with at least one motion component in the direction incident with the workpiece and/or with the support plane defined by the crossbars.

As regards the rotation axes of the processing head, these can be provided parallel with the translation axes oriented in the longitudinal direction of the crossbar and in the processing direction of the workpiece, or at least one rotation axis can be orientated through 360° in a plane.

However, it appears evident that the embodiments described above which provide for the use of the guide for translation of the processing head along a crossbar and/or for the translation in the processing direction of the workpiece of a crossbar can be provided alternatively or in combination with each other with the embodiment in which a mechanism for roto-translating thereof with respect to said crossbar and which mechanism comprises one or more guiding units which allow said processing head to perform relative translation movements with respect to the workpiece to be machined and/or with respect to the crossbar on the whose guide is mounted according to one or more translation axes which are not parallel to each other and according to one or more rotation axes.

End-effector roto-translating mechanisms for carrying out machining of any type on a workpiece, such as, among others, machining by chip removal are known and allow to implement movements of the end-effector according to a plurality of translation and rotation axes, which movements can be mutually independent and/or interlaced and each controlled by a dedicated motorised actuator. Therefore, as regards the configuration of the roto-translating mechanism of the processing head, the person skilled in the art will be able to define the configuration of this mechanism by drawing on his basic technical knowledge and in accordance with the requirements defined by the types of machining that one wishes to make possible with the machine.

On the other hand, the embodiments in which the translation of the processing head with respect to the workpiece to be machined according to the two directions respectively parallel to the longitudinal extension of the beam and/or parallel to the processing direction of the workpiece are obtained thanks to the mechanism of translation of the head along the crossbar itself and thanks to the translation mechanism of the crossbar in the processing direction of the workpiece.

When said embodiments are provided in combination with each other, the processing head only needs a translation guiding unit in the direction incident to the workpiece to be machined, in particular in a direction perpendicular to the plane defined by the processing direction of the workpiece and by the extension longitudinal of the crossbars. This reduces the constructive burden of the roto-translating mechanism of the processing head which must necessarily be provided on the slide or on the cart with which said head is coupled to a crossbar.

According to one embodiment, in combination with any one or more of the embodiments described above, the gantry comprises, in addition to the processing head intended to operate on the side or sides of the workpiece facing the crossbars, also at least one further processing head intended to operate on at least one or on at least some or all sides of the workpiece which do not face the crossbar(s).

In its most specific embodiment, the configuration of the machine can provide that the support surfaces of the workpiece of the crossbars are contained in a horizontal plane, so that at least the longitudinal direction of the crossbars is parallel to said horizontal plane and preferably also the feeding direction is parallel to said plane, whereby the processing head in a position engaged on the guide of a crossbar moves under the workpiece to be machined and operates at least on or from the underside of the same, while the aforementioned second processing head associated with the gantry is cantilevered from above and operates on or from the upper side and/or on the non-horizontal side or sides of the workpiece accessible from above.

When necessary, the gantry can be provided with two or more upper processing heads and/or possibly also with two or more lower processing heads, it being possible to also provide two guides on each crossbar, each of which guides is provided for the cart of respectively one of said two processing heads and wherein also the parking station can comprise two parking areas for respectively one of the two processing heads and specifically two parallel guides each for respectively a cart or a slide of one of said two processing heads.

Alternatively, it is also possible to provide that each crossbar has only one guide for the translation of a processing head at a time, the parking station being provided with several parking areas each intended for parking a different processing head being said parking areas movable in the transfer position of the corresponding processing head on the guide of a crossbar.

With reference to the solution which provides a parking guide for the processing head in the parking station, the aforementioned variant can provide a parking guide for each of the two or more processing heads, said two or more parking guides being mounted that can be moved alternatively between them in the aligned position of extension of a crossbar positioned at said parking station. For example, said two or more guides can be mounted on a cart or on a slide which can be moved in a direction perpendicular to the longitudinal extension of the crossbar to be alternately brought to the position vertically coinciding with the translation guide for the processing head of the crossbar located at the parking station.

In relation to the embodiments described above, these provide that each crossbar carries one or more guides for a processing head on only one side of the same facing the processing direction of the workpiece to be machined with respect to the machining station. However, it is possible to provide that one or more translation guides for one or more processing heads are provided on both opposite sides of one or more of the crossbars, which sides face respectively facing and opposite to the processing direction of the workpiece.

In this case, the parking station will be configured accordingly and provided with parking areas for the processing heads intended to be transferred onto a corresponding guide provided on one or on the opposite side of a crossbar.

With reference to the embodiment which provides at least one guide for at least one processing head in the parking station, in this case, the parking station will have at least one pair of parking guides for at least one processing head, each of the parking guides of said pair being positioned in such a way that when a beam arrives at the parking station, each of the at least two translation guides associated respectively with one of the sides of said crossbar is positioned longitudinally aligned with the corresponding guide in the parking station, allowing the transfer of a processing head on each of said at least two translation guides associated with said opposite sides of the crossbar.

It is evident from the description of the executive variants which provide for several translation guides for respectively a different processing head of a plurality of processing heads, which guides are associated with only one side of the crossbars, that the aforementioned variants are applicable thanks to obvious modifications also to the executive form which provides translation guides on the two opposite sides of the crossbars.

In combination with one or more of the previous embodiments and/or embodiments, the retaining members of the workpiece to be machined on the crossbars or at least on some of them may comprise two positioning stops of the workpiece relative to the longitudinal extension of the crossbar and which are intended to cooperate with opposite sides of the workpiece to be machined, at least one of which stop is stationary and defines a fixed reference position of the workpiece relative to the longitudinal extension of the corresponding crossbar, while the second stop is movable along the longitudinal axis of the corresponding crossbar in the approach to the facing side of the workpiece in the condition of clamping the workpiece against the stationary stop and in the direction of moving away to free the workpiece, by means of motorised actuators.

According to a further feature which can be provided alternatively or in combination with any one or more of the previous embodiments, the said retaining members of the workpiece on or to the crossbars comprise one or more vacuum retaining members, or suction cups, cooperating at least with the side or sides of the workpiece facing a crossbar, optionally at least some of the vacuum retaining members being movable, relatively and separately from each other or together with the other retaining members, along the longitudinal extension of the crossbar.

An improved and optional embodiment provides that each of the crossbars or at least some crossbars is associated with a motorised workpiece displacer in the direction of the longitudinal axis of the crossbar, which motorised workpiece displacer can be coupled and uncoupled alternatively to the workpiece.

Said motorised workpiece displacer along the crossbar(s) allows the automated execution of the workpiece loading and positioning operations and said displacer can also be controlled in a synchronized manner with the movement of the crossbars and/or the activation or deactivation of the positioning stops and/or of the retaining members when provided by the control unit, the control program executed by the same being provided with the instructions for carrying out said functions.

Advantageously and in a further improvement, said motorised displacer has a workpiece transport surface to be machined, which transport surface can alternatively be lifted in a contact position against one side of the workpiece which is facing the crossbar and lowerable in a contact position away from said side of the workpiece.

In one embodiment, in the raised position of said motorised displacer, the transport surface is at a higher level than the support surface of the workpiece to be machined on the crossbar, while in the position spaced from said side of the workpiece, said transport surface is at a lower level than the support surface of the workpiece to be machined on the crossbars.

In a particular embodiment of the aforementioned motorised displacer, the motorised displacer comprises at least one continuous belt conveyor, which continuous belt is oriented in the longitudinal direction of the corresponding crossbar and is deflected around end pulleys of which at least one is motorised, the belt preferably extending along the entire length of the crossbar and said belt being alternatively movable in a contact position against the side of the workpiece facing the crossbar and in a spaced position from said side.

In one embodiment, it is possible to move the motorised displacer in said two raised and lowered positions limited to the upper branch of the tape in contact with the workpiece.

An executive variant envisages instead that the entire unit of the conveyor belt comprising a frame on which the transmission pulleys of the same are mounted, the drive group of at least one or some of said pulleys and the conveyor belt are translated into said two raised and lowered with respect to the beam, said conveyor belt unit being a separate unit from the beam and constrained to the same by means of translation guides in said lifting/lowering direction and lifting and lowering actuators being provided.

In one embodiment, each crossbar can consist of a pair of longitudinal members, preferably parallel to each other, which are fixed to each other at a predetermined distance.

In this case, a translation guide of the processing head can be provided on the side of one of said two longitudinal members facing an adjacent crossbar.

According to yet another feature which can be provided in combination with any one or more of the preceding ones, a motorised displacer can be coupled to each side member according to one or more of the previous embodiments, including for example the embodiment which provides such a motorised displacer in the form of continuous conveyor belt.

In this embodiment, the positioning stops and/or the retaining members are provided mounted that can be displaced in the longitudinal direction of the crossbars and in correspondence with the intermediate area between the two side members.

This makes it possible to have sufficient space for positioning the displacement and/or activation/deactivation actuators according to one or more of the variants described above and/or described below.

Still according to a feature, in combination with any one or more of the preceding embodiments and/or executive variants, at least one of the processing heads, preferably each of the processing heads comprise an electro-spindle with an automatic tool changing system.

This automatic tool change system provides for a tool holder magazine which has a plurality of supports and/or housings each for a respective tool of a plurality of tools of which at least part are different from each other, said magazines being positioned in a position coinciding with at least one trajectory of displacement of the processing head according to said translation and rotation movements controlled by the roto-translating mechanism of the same and being said tool change system controlled by the control unit which executes a control program containing the instructions for the execution of the above tool change functions.

One embodiment provides that said electro-spindle and said automatic tool change system are made according to one or more of the embodiments described in document EP17198319.

The invention also refers to a method comprising the features set forth in claim 16.

According to one embodiment, the positioning of the workpiece along the longitudinal extension of the crossbars takes place by means of motorised means for translating the workpiece.

According to a further embodiment, the loading step provides for loading at least two separate workpieces in a position side by side with reference to the longitudinal extension of the crossbars and in which the two workpieces are loaded and positioned against a common reference stop in position of the two workpieces in contact with each other, subsequently the workpiece to be machined not in direct contact with the positioning stop moved away from the workpiece to be machined in contact with said positioning stop to a predetermined extent by activating separate retaining members of the two workpieces to be machined which can be moved manually or by means of motorised actuators along the longitudinal extension of the corresponding crossbar.

Further improvements and/or further embodiments of the method are envisaged and described with reference to the operating modes of the machine according to the present description with reference to what has been previously described and to the following detailed description of an embodiment.

These and other characteristics and the advantages of the present invention will become clearer from the following description of an embodiment illustrated in the accompanying drawings in which:
Fig.1 shows a top perspective view of an executive example of a machine according to the present invention.
Fig. 2 shows an enlarged detail of figure 1 in which the casing elements have been omitted from the gantry.
Fig. 3 is a view similar to figure 2 in which the workpiece in the form of a beam has also been omitted.

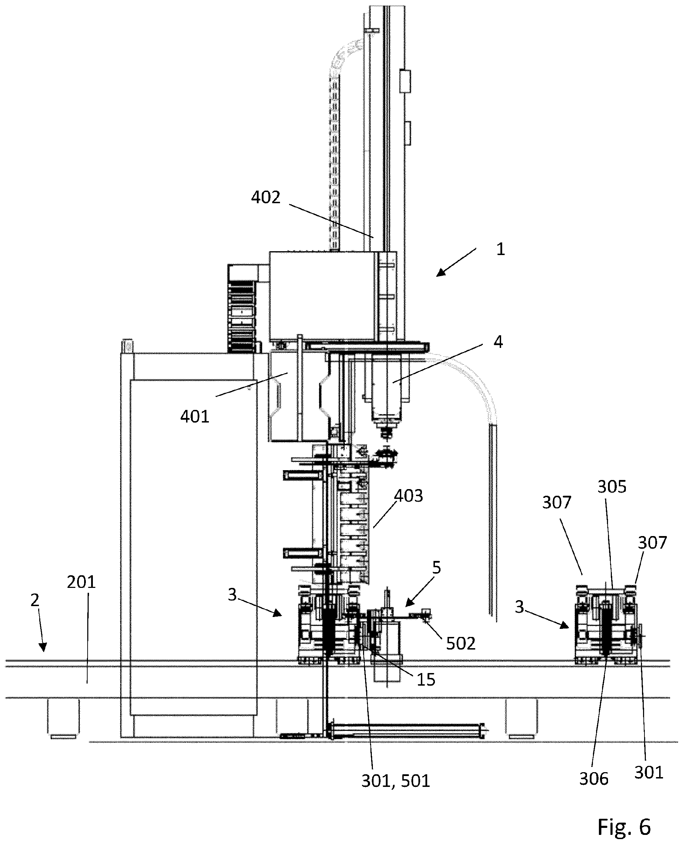

Figures 4 to 6 are enlarged views respectively in the processing direction of the workpiece, in the vertical direction from above and in the direction of the longitudinal axis of the crossbars, of the gantry of the machine according to the embodiment of the previous figures.
Figures 7 to 9 show different phases of the process of transferring the lower processing head from the parking station 50 to the translation guide of a crossbar which has been brought to correspond with said parking station.

In the illustrated embodiment, the machine according to an embodiment of the present invention is shown in combination with a workpiece in the form of a beam or the like, having a larger dimension in a direction which is intended parallel to the processing direction of the workpiece.

This representation must not be considered as a limitation of the present invention since, as will also appear from the following description, the crossbars can also be used for machining workpieces which have larger dimensions also in the two directions which define the horizontal plane, such as for example walls or slab-shaped elements and/or panels.

Furthermore, it is also possible to provide that two or more workpieces to be machined are loaded onto the crossbars which are placed side by side in the longitudinal direction of the crossbars themselves, i.e.in a direction transverse to the processing direction of the workpieces.

As previously highlighted, with regard to the processing heads and/or retaining members and/or positioning stops and/or positioning translators of the workpiece(s) on the beams as well as actuators for moving the stretched beams and/or said retainers and / or of said retaining members multiple variants are possible which are known and present in the basic technical knowledge of the person skilled in the art and which have been described and/or will be described hereinafter, in particular when considered preferred alternative embodiments or which confer alternative technical advantages and/or additional to the more general embodiments.

Although the illustrated example provides for a single lower processing head and a single upper processing head, it is possible to provide, as already highlighted above, at least two upper processing heads and/or at least two lower processing heads, resulting in the construction characteristics necessary for the integration or the modification of the illustrated embodiment in the presence of the two or more lower and/or upper processing heads in an obvious way and directly derivable for the person skilled in the art from the description of the present embodiment.

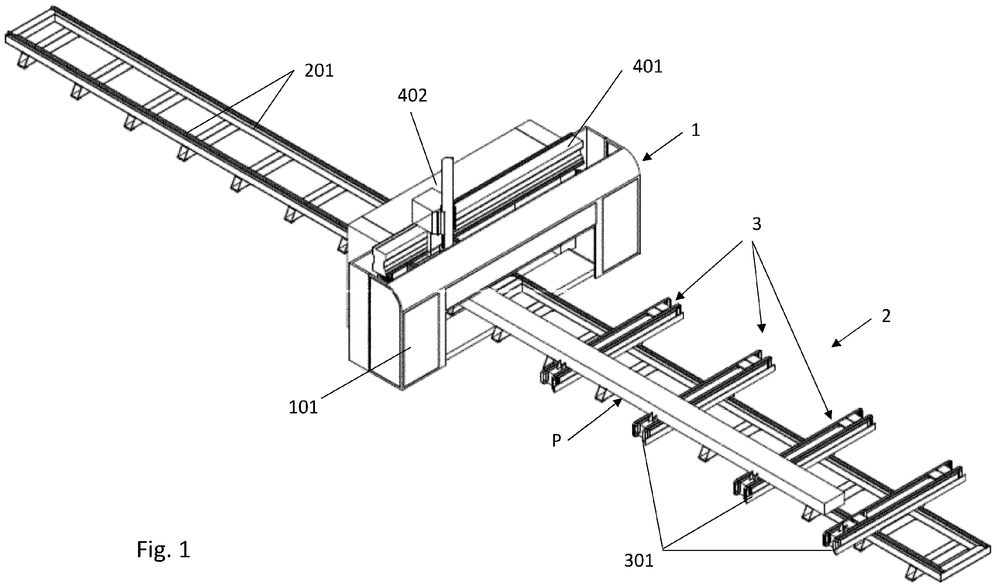

Figure 1 shows an overall view of a machine according to an embodiment of the present invention.

A worktable consists of a conveyor 2, specifically horizontal, which comprises a pair of guides 201 parallel to each other and oriented in the processing direction of a workpiece P to be machined. The conveyor passes a processing gantry 1.

In the illustrated embodiment, said gantry 1 is provided at an intermediate point of the longitudinal extension of the conveyor 2 in the processing direction of the workpiece and defines a loading end of the workpiece and feed to the gantry and an opposite end for unloading the workpiece P.

The conveyor according to the illustrated embodiment consists of a plurality of crossbars 3 which are oriented perpendicular to the processing direction of the workpiece P towards and through the gantry 1, i.e. to the guides 201 and which are engaged for sliding on said guides 201.

The crossbars can be moved along the guides 201 by means of motorised actuators.

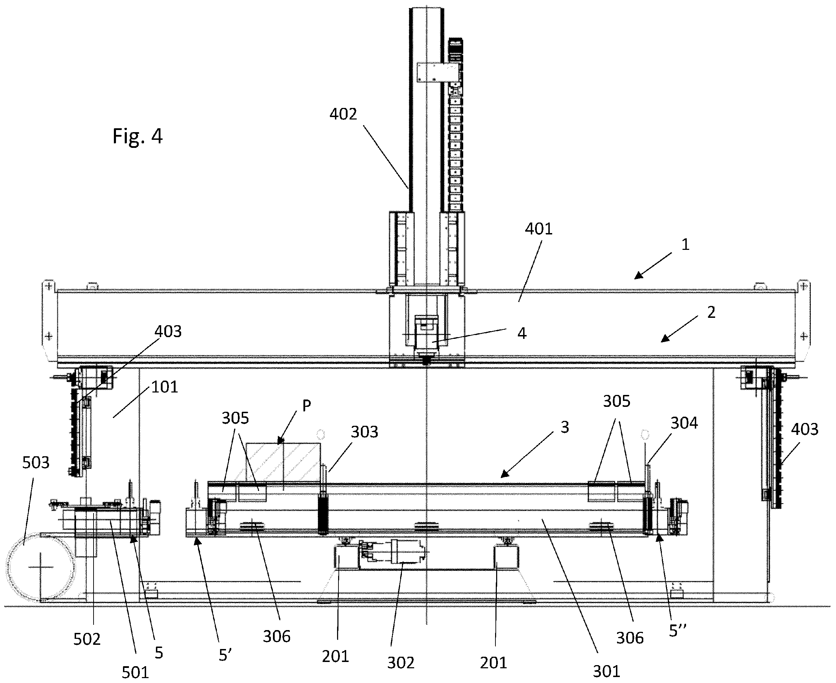

It is possible to provide a single motorised actuator for all the crossbars or for some groups consisting of only some of the crossbars, or it is possible to provide a separate and independent motorised translating actuator for each or at least some of the crossbars 3. An example of such an actuator is shown in figure 4 and is indicated with the number 302.

The motorised translating actuator or the motorised translating actuators of the crossbars 3 are controlled by a control unit (not shown in detail), which can be part of a control unit which is provided, for example, in the structure of the gantry 1. For example, the control unit may be in the form of a processor, such as a PLC or the like that runs control software. In this case the control software also includes, among other things, the instructions for commanding the activation or stopping of the translating actuator(s) of the crossbars 3 in a synchronized manner like the other functions of the machining process as will appear more clearly hereinafter. When for example each crossbar or only some of the crossbars or different groups of crossbars are provided with a separate and dedicated motorised translating actuator, then the control software executed by the control unit further comprises instructions for synchronizing said crossbars with each other and/or the said groups of crossbars to perform relative movements between at least one of the crossbars with respect to one or more of the other crossbars or between a group of crossbars with respect to one or more of the other crossbars or other groups of crossbars or to perform movements together of all or of part of the crossbars without any relative displacements occurring between them.

The machining gantry 1 can be made in any way and in the present example has an upper horizontal guide 401, provided at a predetermined distance from the workpiece support plane P made up of upper support surfaces of the individual crossbars 3.

The vertical translation guide 402 of an upper processing head 4 moves along the upper horizontal guide 401, i.e. a processing head which performs machining of or from the sides of the workpiece which are oriented opposite to the crossbars 3 and/or at least with one directional component perpendicular to the work plane or to the support surfaces of the workpiece P of the crossbars 3.

The aforementioned processing head 4 can be made in such a way as to have further degrees of freedom or translation and/or rotation axes according to one or more possible executive variants and widely known to the person skilled in the art for the orientation and movement of end effectors on supports for movement and orientation of the same.

For example but not limitingly, it is possible to provide a rotation of the processing head about the vertical axis and/or also a rotation of the same with respect to a horizontal axis. Furthermore, the translation of the processing head with respect to the workpiece P to be machined can take place thanks to the forward movement of the workpiece with respect to the gantry 1 thanks to the translation of the crossbars 3 along the guides 201 for the translation of said crossbars 3 in the forward direction.

Alternatively, the horizontal guide 401 oriented parallel to the crossbars 3 and/or perpendicular to the processing direction of the workpiece P can further be mounted on horizontal translation guides oriented in the processing direction of the workpiece P, whereby said horizontal guide 401 can move relative to the columns 101 of the gantry 1 in the processing direction, forward and/or backward.

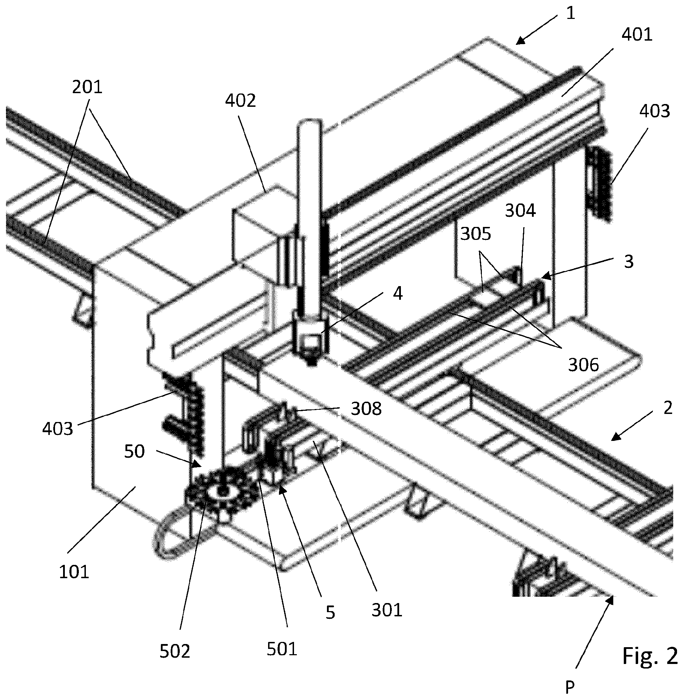

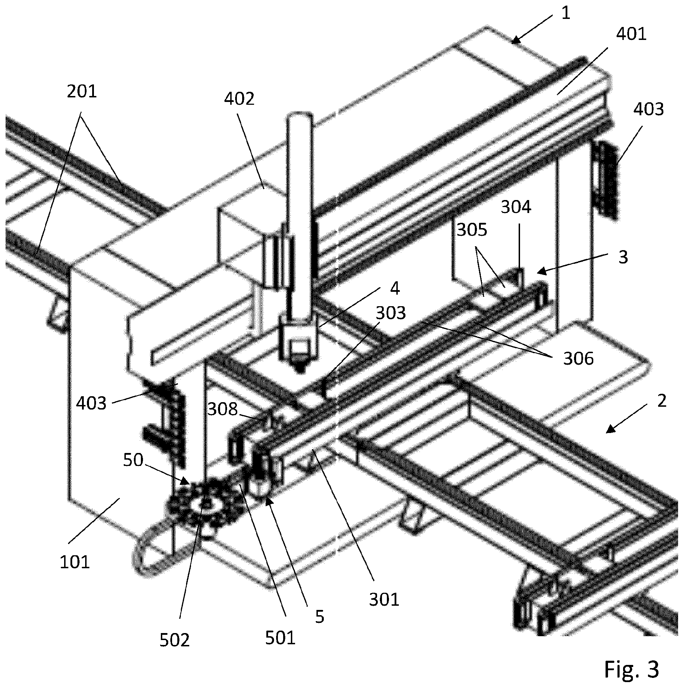

Figures 2 and 3 show in greater detail an executive example of the processing head 4 which provides a mechanism for roto-translating of said head with respect to the gantry and the workpiece P according to a horizontal axis parallel to the longitudinal extension of the crossbars 3 along the guide 401 and a vertical axis along the guide 401, while it has two rotation axes, one of which coincident or parallel to the vertical translation axis and one horizontal and constrained to rotate in the horizontal plane perpendicular to the vertical rotation axis.

As is evident from figures 2 and 3 and as will be described in greater detail with reference to the following figures, two magazines 403 are provided on the side columns 101 of the machining gantry 1 for replacement tools to be mounted alternately on the processing head 4.

Different embodiments of automatic tool change systems on a processing head are known.

By way of non-limiting example, but only for purposes of completeness of the description, a processing head can be made by an electro-spindle with an automatic tool change system as described in document EP 17198319 (publication no. EP3315251A1) or also according to other forms executive currently known in the state of the art and widely marketed and used, among others, also by the same owner and visible in the information material accessible from the website of the same.

In relation to what has been described, it is important to note that although the position of the worktable or of the support surfaces of the workpiece to be machined of the crossbars 3 which form the worktable or the workpiece positioning and transport plane P is horizontal, this position can also be provided inclined with respect to the horizontal plane in a fixed and/or variable manner within a predetermined range, and in particular within a range which maintains the horizontal directional component as the preponderant or greater directional component.

This embodiment requires modifications of the configuration of the embodiment described with reference to the horizontal position which however are obvious to the person skilled in the art and which are clearly structurally defined once the inclined or inclinable orientation of said plane has been foreseen.

In a completely general way, it is possible to provide that in combination with a possibility of modifying the horizontal position of the workpiece, inclining it, it is also possible to provide a corresponding inclination of the translation guides of the second lower processing head 5 which will be described below with possibly also a corresponding modification of the orientation of the associated guide provided in the parking station 50.

Figures 2 and 3 show a crossbar 3 positioned at the gantry 1 which defines the processing station and the parking station 50 of a further lower processing head 5.

The figures show a preferred embodiment of the present invention, in which each crossbar 3 is provided on one side facing and/or opposite the processing direction of the workpiece P with a translation guide 301 which is oriented parallel to the longitudinal extension of the corresponding crossbar 3 and which is intended to engage a cart 15 or a support slide of a lower processing head 5.

Said lower processing head 5 when in rest condition is held in a parking station 50 which comprises a guide 501 which is made as an extension of the translation guide 301 provided on the crossbar 3.

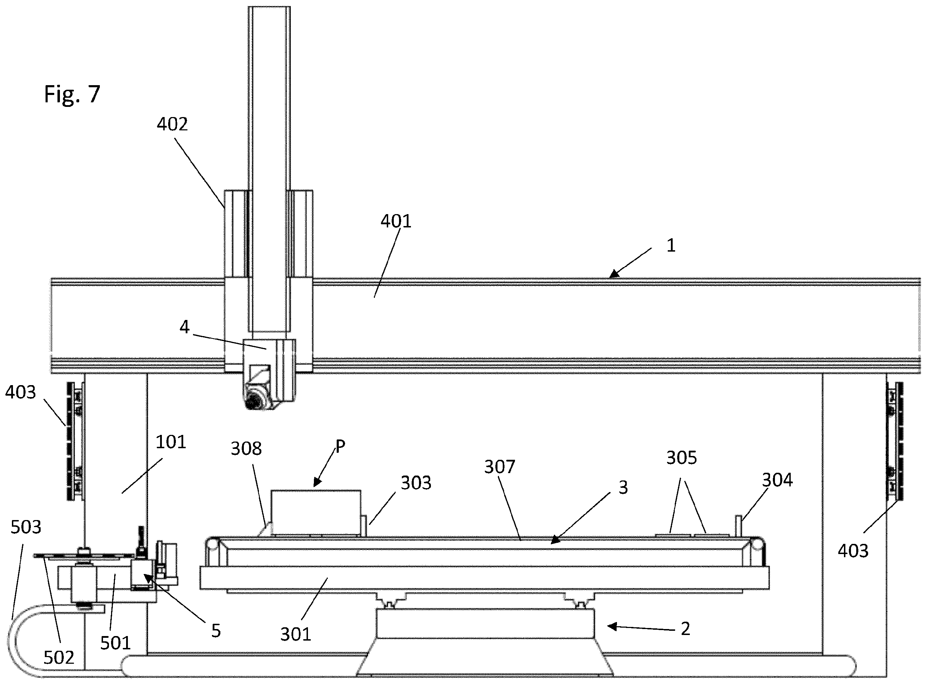

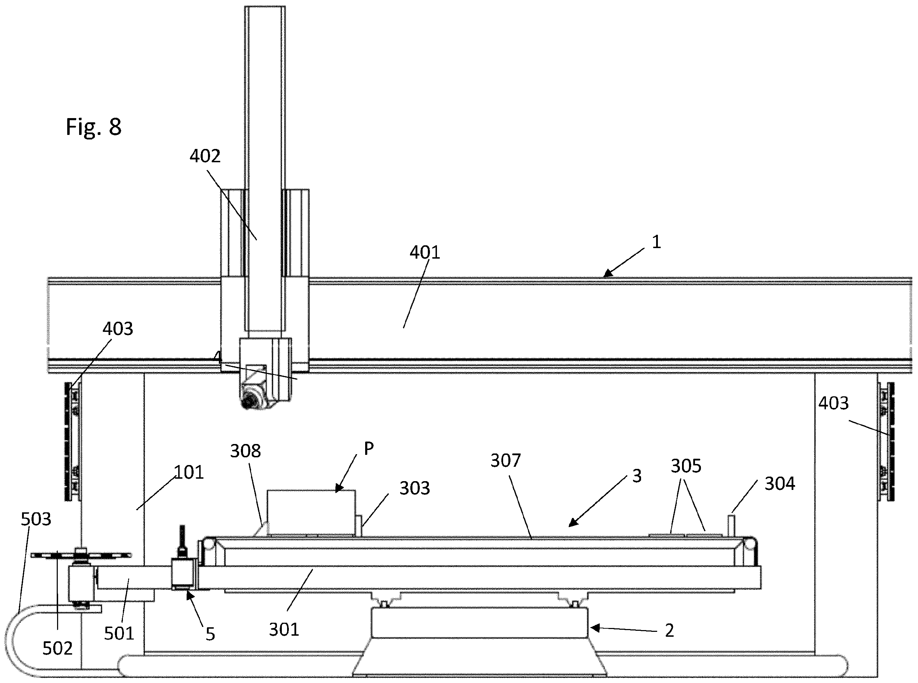

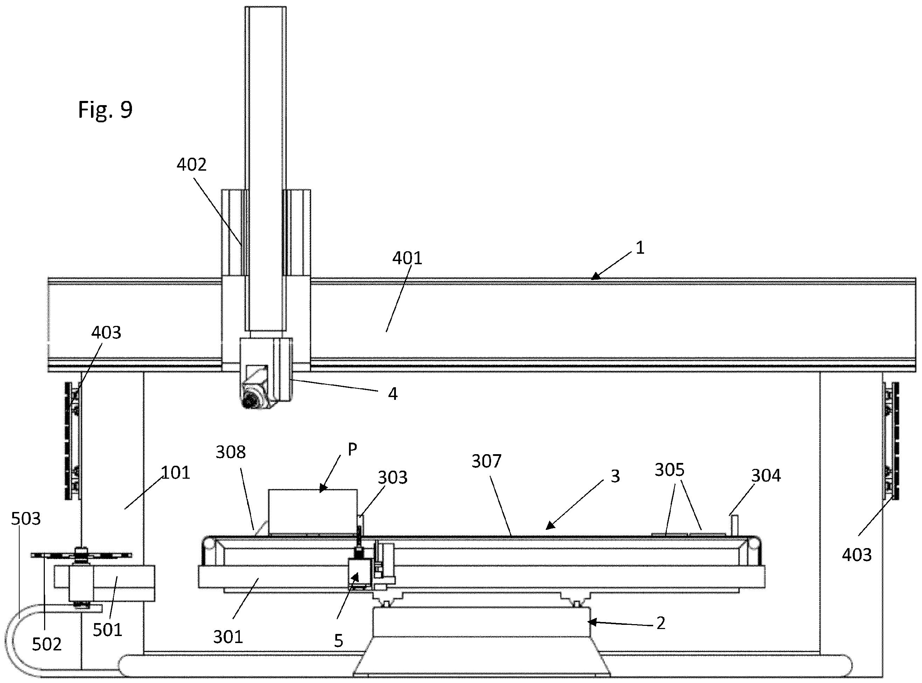

For the transfer of the processing head 5 onto the guide 301 associated with a crossbar 3, this crossbar must be brought in correspondence with the parking station 50 and in particular in a position in which the guide 501 of the parking station 50 is perfectly aligned as an extension of the itself with the guide 301. In this condition, the motorised actuators (not shown in detail) of the cart 15 or of the slide on which the lower processing head 5 is mounted are activated, this activation causing the movement of the cart 15 or of the slide from the guide 501 to the guide 301 associated with the crossbar 3. This condition is illustrated in figure 2 and in figure 3 and the passage of the processing head 5 from the parking station 50, or from the parking guide 501 to the translation guide 301 associated with a crossbar 3 is shown in figures 7 to 9.

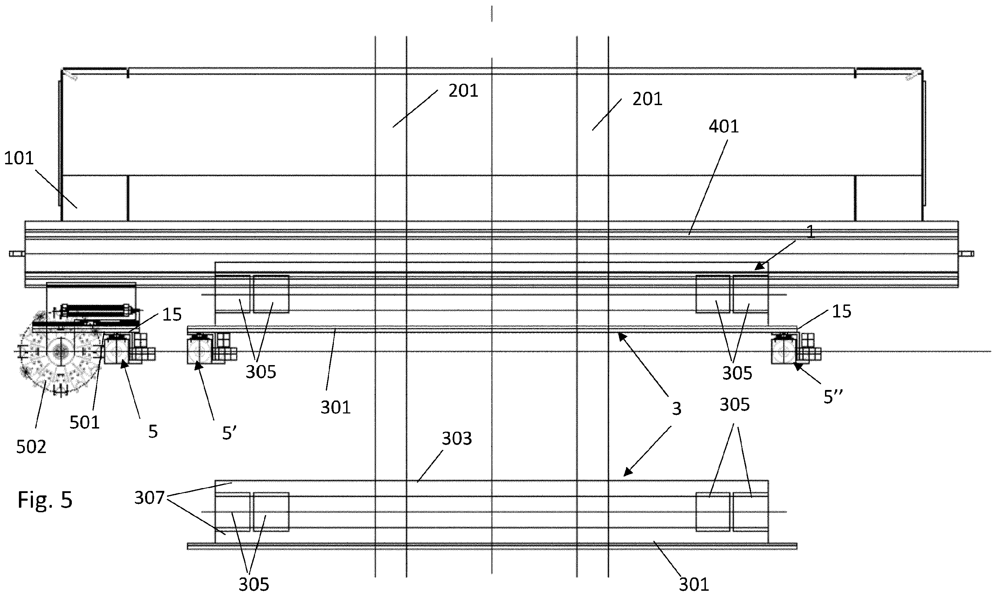

Figures 4 and 5 show, indicating them with respectively 5, 5' and 5'', three possible positions of the lower processing head 5, i.e. the lower processing head on the guide 501 of the parking station, the processing head 5' in a position engaged on the end of the guide 301 of the crossbar 3 facing the parking station, i.e. in the condition immediately following the passage from the parking station 50 to the crossbar. 5'' shows the processing head in the possible end position at the end of the guide 301 of the crossbar 3 opposite the parking station 50.

In relation to the possible embodiments of the cart 15 and/or of the slide carrying the lower processing head 5, it is possible to provide that the motorised translating actuators are mounted on the cart and/or on the slide.

Furthermore, on the cart 15 and/or on the slide there are provided all the motorised actuators and the motors necessary for carrying out operations for moving the processing head 5 and for actuating the tool.

The connection of said motorised actuators and/or of said motors to the respective power sources can advantageously take place by means of roll-up connections of cables and/or flexible pipes and flexible containment raceways.

In one embodiment, each guide 301 and/or 501 can be provided with a rack with which a pinion or possibly a pair of motorised pinions engages spaced apart in the translational direction and which are provided on the cart 15 or on the slide which carries the processing head 5.

Similarly to the upper processing head 4, the processing head 5 can also be provided in combination with an automatic tool change system of which a rotating magazine 502 for the various replacement tools is shown. Also in this case, the processing head can be made according to various known embodiments and for example according to what is described in the document EP17198319 (publication number EP3315251A1) mentioned above.

As previously indicated, the lower processing head 5 can be mounted on the cart or on the support slide with the interposition of a roto-translating mechanism of the same which can allow the translation of the processing head, or of the tool according to one or more translation axes not parallel to each other and/or rotation according to one or more axes not parallel to each other and/or possibly also coinciding with one or more of the translation axes. For the movement of the processing head 5, a roto-translating mechanism can be provided according to one or more of the embodiments known in the state of the art for the movement of end effectors on mechanical and motorised or robotised support arms.

However, the illustrated embodiment shows a particularly advantageous solution in which the translation of the lower processing head 5 along a horizontal axis perpendicular to the processing direction of the workpiece P is followed thanks to the translation of the processing head along the guide 301 associated with the crossbar 3. In this case, therefore the crossbar 3 and the corresponding translation guide 301 assume for the processing time the function similar to that of the horizontal guide 401 of the gantry 1 for the upper processing head 4.

The relative movement between the tool and the workpiece P according to an axis parallel to the processing direction of the workpiece P can take place thanks to the translation of the crossbar 3 in the processing direction providing that the crossbar 3 is placed in a condition of release from the workpiece P at the end to be able to perform movements relative to said workpiece.

In this way, with regard to the translation movements, the cart 15 or the slide carrying the processing head 5 can only have a roto-translating mechanism which provides at least one translation guide of the processing head 5 relative to said cart 15 and/or the said slide according to a vertical axis, i.e. a direction incident with the workpiece P. The roto-translating mechanism can optionally comprise rotation units about one or more rotation axes such as, for example, those provided for the upper processing head. The configuration of the combination of translation axes and/or rotation axes for moving the lower processing head 5 depends, as also for the upper head 4, on the working methods envisaged and/or desired for the machine.

As regards the positioning of the workpiece with reference to the crossbars 3 and in particular in relation to the position of the workpiece with reference to the longitudinal extension of the crossbars, each crossbar has at least one positioning stop 303. This positioning stop 303 can be controlled in an active stop position as shown in figures 4 and also 7 to 9, in which it protrudes above the support surface of the workpiece P on the crossbar 301. In the inactive condition the stop 303 is withdrawn below said support surface of the crossbar 3 to the P workpiece.

In one embodiment, the stop can be mounted that can be moved along the longitudinal extension of the crossbar and can be locked in position. The movement can take place both manually and thanks to motorised actuators also controlled by the control unit. In this case the control program comprises the instructions for enabling said control unit to control the functions of said stop, in particular in a synchronized manner with the other steps of the machining process.

In particular, according to the illustrated embodiment, the stop 303 is controlled in the two active and inactive positions by a pneumatic or oleodynamic actuator.

When the stop can be positioned manually and/or automatically in a plurality of positions along the longitudinal extension of the crossbar 3, it can be provided in combination that said position is transmitted to the control unit which stores it as a position reference of the workpiece on the worktable which is used to calculate the movements of the processing heads for carrying out the foreseen machining operations.

According to a preferred embodiment, but not to be considered limiting, the stop 303 can also be fixed with respect to the position with respect to the longitudinal extension of the crossbar.

According to a further feature which can be provided in combination with each of the different variants of the positioning stop 303, it is possible to provide at least one further stop 304 made similarly to one of the embodiments of the stop 303.

In one embodiment, the said at least further stop 304 is provided fixed in position at the end of the corresponding crossbar 3 opposite the parking station 50 of the second processing head 5 or is movable for at least a part of the length of the corresponding crossbar 3, preferably but not limited to an area in the middle of crossbar 3 furthest from the parking station 50.

The positioning stop 303 and/or the positioning stop 304 can have identical or different positions on the different crossbars 3 intended to cooperate with a workpiece.

When the side edge profile of the workpiece is not straight and oriented parallel to the processing direction, the individual stops 303 and/or 304 can be brought to the position corresponding to the intersection point of the edge profile of the workpiece P facing away from the parking station 50 with the corresponding crossbar 3.

This positioning can be performed manually or automatically by the control unit in combination with the movement actuators of the individual stops 303 and/or 304 along the longitudinal extension of the corresponding crossbar 3.

With reference to yet another feature which may or may not be present and which is illustrated only in portions of the figures and in particular figures 2, 3, 7 to 9, each crossbars or at least some of the crossbars may comprise a workpiece retention element to be machined P which is of the mechanical type and which consists of a second movable stop 308 in the direction of the longitudinal extension of the crossbars and which can be moved against the side or sides of the workpiece P opposite to those facing the positioning stops 303 and/ or 304 in order to lock the workpiece P in position and optionally tighten it against the opposite positioning stop 303 or 304.

As an alternative to or in combination with the movable stop 308 for mechanically locking the workpiece P in position against the stops 303 or 304 and/or for clamping the workpiece P on the crossbar 3, it is possible to provide retaining members indicated with 305 which operate vacuum, or suction cup. In the embodiment illustrated, these retaining members consist of suction cups in the form of plates intended to come into contact with the side of the workpiece P facing the crossbars.

Preferably a certain number of these retaining members 305 are provided which are distributed along the longitudinal extension of the crossbars 3. Preferably and optionally, all or at least some of these suction cup retaining members 305 can be moved relative to the longitudinal extension of the corresponding crossbar, for example manually and/or by means of motorised translating actuators.

In the illustrated embodiment, the crossbars 3 consist of two parallel longitudinal members spaced apart by a certain distance from each other and the positioning stops 303, 304, and/or the retaining members 305, 308 are provided housed in the intermediate space between the two side members.

In this case, when the positioning stops 303, 304, and/or the retaining members 305, 308 are made to slide, these are guided on the two mutually opposite sides by a translation guide provided along the edges of the sides of the two longitudinal members facing each other.

The retaining members 305 and/or 308 of the workpiece P are preferably made that can be activated and deactivated in relation to the retention action of the workpiece P so as to allow the positioning of the workpiece relative to the crossbars and also in such a way as to allow to release, i.e. release from the workpiece P the crossbar 3 respectively carried in correspondence with the machining station and over which the lower processing head 5 has passed.

This therefore makes it possible to use said crossbar 3 as a guide for the relative displacement of the lower processing head 5 with respect to the workpiece P to be machined, in the horizontal direction and perpendicular to the processing direction of the workpiece and to use the relative displacement in the processing direction of said crossbar 3 with respect to the workpiece held stationary by at least one, preferably by at least two or more of the further crossbars 3.

In relation to this feature of the machine according to the present invention it should be noted that the workpiece to be machined is preferably supported by at least three crossbars 3, so that when one of said three crossbars is brought in correspondence with the machining station and the station of parking 50 to load the lower processing head 5 on the translation guide associated with it, this crossbar can be released from the workpiece P by deactivating one or more or all the positioning stops and/or the retaining members in order to allow a relative movement between said crossbar 3 and the workpiece P. The further crossbars 3 on which the workpiece P rests on the other hand keep the positioning stops 303, 304 and/or the retaining members 305 and/or 308 active and the workpiece P therefore remains firmly held on them and in the correct position with respect to the machining station.

When the workpiece advances for machining in the areas adjacent to one or more of the further crossbars 3 which support the workpiece, the respectively front crossbar present in the machining station has remained aligned with the guide 501 of the parking station 50 or it is realigned with said guide 501 of the parking station 50 and the lower processing head 5 is unloaded from the translation guide 301 of said crossbar 3 and carried on the guide 501 of the parking station. The positioning stops 303, 304 and/or the retaining members 305 and/or 308 of said crossbar from which the lower processing head 5 has been unloaded are activated and the workpiece is caused to advance thanks to the translation of the crossbars 3 along the guides 201 until bringing a subsequent crossbar 3 to the machining station and the parking station 50 which is provided adjacent to an area of the crossbar 3 in which it is necessary to carry out machining on or from the side or sides facing the crossbars 3. For said crossbar 3 being brought into the machining station, the steps described above are then carried out for loading the processing head and releasing the crossbar 3 from the workpiece P to allow the relative translations of the same with respect to the workpiece P. In this case, when it is a question of an intermediate crossbar 3, the workpiece remains constrained in the correct position to the crossbars upstream and downstream of the crossbar 3 carried in the machining station which, as indicated above, is instead released from the workpiece P in relation to its movement.

It is worth pointing out here that for the execution of the transfer step of the lower processing head 5 onto the guide 301 of a crossbar 3 provided in the parking station 50, it is possible that said crossbar 3 must or can be released from the workpiece P before said transfer, in order to position any position offsets between the position of the workpiece P in the processing station envisaged for carrying out the processing and the alignment position of the guide 301 of the crossbar 3 with respect to the guide 501 of the parking station 50. This modality is purely possible and optional since the control program is provided with the instructions to precisely define the position of the crossbars upstream with respect to the workpiece P with reference to the areas in which the machining of the workpiece P must be carried out, so these relative positions between the crossbars 3 and the workpiece P are foreseen in register with each other already upon loading the workpiece P onto the same before the workpiece P is carried and progressively passed into the machining station for the execution at the pre-established points of the same planned processes.

However, this condition does not exclude the possibility for the machine according to the present invention that thanks to the particular construction of the machine and the independent positioning of at least some or all of the individual crossbars 3 and/or at least some groups of these with respect to the workpiece P and to the machining station the crossbars 3 can be repositioned at any time of the machining process, both with respect to the workpiece P and with respect to the machining station and also with respect to each other.

This possibility is possible with any of the embodiments and variants described and illustrated above.

According to yet another feature which may or may not be provided and which is present in the embodiment illustrated, at least some of the crossbars, preferably each of the crossbars is provided with a conveyor for loading and/or positioning the workpiece relative to its position with reference to the longitudinal extension of the crossbars 3. In particular, this conveyor is provided for making the workpiece advance against a positioning stop 303 or 304.

Different embodiments are possible for this conveyor and in the illustrated example this conveyor consists of at least one continuous belt conveyor indicated with 307 and which has a horizontal branch in contact with the workpiece P which extends substantially along the entire length of the corresponding crossbar 3 and which is sent around end pulleys not visible in detail, at least one of which is motorised and controlled by the control unit thanks to instructions codified in the control program executed by the same.

According to an advantageous embodiment, said conveyor is mounted on a separate frame which can slide vertically with respect to the corresponding crossbar 3 so as to be able to be lifted against the facing side of the workpiece P, optionally lifting it with respect to the support surface on the crossbar 3 of the said workpiece P and also in such a way as to be able to be lowered with respect to the said support surface of the workpiece P on the crossbar and/or on the retaining members 305. This action can be performed by means of motorised actuators such as for example linear hydraulic actuators indicated schematically in the figures and identified from number 306.

When, as in the illustrated embodiment, each crossbar 3 is made up of a pair of parallel and spaced apart longitudinal members, it is possible for a conveyor belt to be associated with each longitudinal member, preferably consisting of two conveyor belts driven by a common motor and in a synchronized manner between them or in the case each belt has its own motor being said synchronized drive controlled by the control unit thanks to the control software.

According to yet another feature not shown in detail, the combination of a plurality of positioning stops distributed in corresponding different positions along the longitudinal extension of the crossbars 3 and optionally displaceable along them, with retaining members which are also displaceable and lockable in position along the longitudinal extension of the crossbars 3, allows to load and correctly position relative to the machining station even two or more workpieces to be machined side by side in the direction of the longitudinal extension of the crossbars 3. In this case it is possible to activate the positioning stop 304 at the end of the crossbars 3 opposite to the loading one and of translating the workpieces P together into position in direct contact with each other along the facing sides oriented in the forward direction. The next step provides for the movement of at least one retaining member, in particular of the suction cup type in correspondence with each of the workpieces P, the activation of said retaining members to retain the corresponding workpiece P and the translation of said retaining members along the corresponding crossbar 3 in order to position each of said retaining members in a position of the associated workpiece P corresponding to a predetermined distance thereof from the adjacent workpiece(s) P. Optionally it is possible to translate at least one positioning stop 303, into the corresponding position to that of workpiece P in order to define said position by bringing workpiece P against said stop. The translation of the positioning stops 303 into the correct reference position for each of the side-by-side workpieces P can take place thanks to the fact that in the disabled condition of the positioning stops 303, these can move along the crossbar 3 without interfering with the workpiece P.

According to a possible embodiment, for each of the side-by-side workpieces P and/or for at least some of them, it is also possible to provide a stop of the type similar to the tightening stop 308.

Yet according to another characteristic, the machine of the present embodiment can be provided in combination with two or more lower processing heads 5.

There are several implementation possibilities. According to a first embodiment it is possible to provide a further parking station for each of the two opposite ends of the guide 301 for the translation of the lower processing head 5. Both of these parking stations carry a processing head and these can be loaded simultaneously or alternately with each other on the guide 301.

A further embodiment can provide that each of the two sides of the crossbars respectively the one facing and the one opposite to the processing direction of the workpiece P carry a translation guide for a lower processing head, being the parking station for example the one provided with two guides 501 positioned relative to each other in such a way that when the guide 501 is aligned in the correct transfer position of the processing head 5 on the guide 301 of the crossbar 3 also the corresponding further guide in the parking station is aligned with the further translation guide on the face of the crossbar that faces in the forward direction.

A further executive variant provides that when a second parking station is also provided at the other end of the crossbar 3, this too is provided with two parking guides each for transferring a processing head respectively onto the translation guide 301 and onto the one provided on the side of the crossbar 3 facing the forward direction.

A further variant can provide that at least the parking station 50 has two parking guides 501, each dedicated to a processing head. The crossbar can have a single translation guide 301 in combination, the two guides 501 being vertically translatable to be brought alternately with each other into an aligned position for transferring the corresponding processing head 5 onto the translation guide 301.

Alternatively, the crossbar can have two guides parallel to each other and vertically offset by a predetermined distance, the two guides 501 of the parking station being also vertically offset corresponding to the two guides on the crossbar 3 and in such a position that said guides are aligned simultaneously with a respective guide on crossbar 3.

Yet another possible variant provides for a magazine provided in the parking station and which is provided with a plurality of guides for storing as many processing heads, said storage guides being alternately displaceable with each other in an aligned and transferring position of the corresponding processing head on a guide of parking 501 from which in turn the processing head is transferred onto the translation guide 301 of a crossbar.

These embodiments can also be provided in combination with the embodiments which provide for a parking station for each end of the translation guide and/or with the embodiments which provide one or more translation guides on the same crossbar and/or with the embodiments which provide one or more transfer guides on each of the two faces of the crossbar respectively the one facing in the processing direction and the one opposite to said processing direction.

The embodiment of these executive variants can be obtained by suitably modifying the construction of the illustrated and described embodiment without requiring inventive efforts.

These embodiments, like the executive variants described also in relation to the possible functions of the machine, make it possible to give the machine considerable configuration and operating flexibility so as to be able to optimize the operations envisaged for the machine both from the point of view of constructive simplicity and from the point of view of processing times.

In relation to the control of the functions of the machine with reference to the detection of the positions of the workpiece relative to the processing heads and/or to the machining station and also with reference to the position of the crossbars 3 as well as of the positioning stops and of the retaining members according to any of the variants described above, in combination with the motors and motorised actuators provided for these elements, one or more sensors are provided such as position sensors and/or displacement sensors and/or encoders on the motors and others which are also connected to the control unit. The control unit is also provided with a user communication interface for uploading data by the user and/or for communicating information and/or warnings to the user and/or for requesting data from the user himself.

The control unit executes a control program which contains the instructions for configuring said unit to control the elements present in the machine according to one or more of the variants described and in accordance with the dimensional data of the workpiece or workpieces to be machined and the required machining operations and/or in accordance with the signals coming from one or more position and/or displacement sensors and/or from the motor encoders and/or from other sensors.

In one embodiment, the control unit is associated with or comprises software for determining the machining process and the steps of said machining process with reference also to the initial positioning of the workpiece or workpieces to be machined and/or also with reference to the sequence of processing steps and the sequence of movement steps of the workpiece with respect to the processing station and/or with respect to the processing heads.

The aforementioned instructions depend on the configuration of the machine, the type of workpiece(s) to be machined and the type of processing and vary from time to time in relation to the aforementioned variables.

## Claims

1. Workpiece processing machine such as beams, slabs, panels, and the like, which machine comprise:
- at least one machining station comprising at least one gantry (1) supporting at least one upper processing head (4), wherein the processing head is movable along at least two mutually non-parallel axes and/or rotatable around at least one or at least two mutually non-parallel axes by means of motorised roto-translating mechanisms;
- a conveyor (2, 3) for feeding at least one workpiece (P) from a loading station to said machining station (1);
- wherein said conveyor comprises devices for moving a workpiece (P) along a path in a processing direction towards and/or through and/or away from said gantry (1);
- said conveyor comprising a plurality of supporting crossbars (3) of said workpiece (P) which are distributed side by side along said path and which are oriented transversely to said processing direction of said workpiece and are positioned or positionable each at a predetermined distance from adjacent crossbars (3);
- said crossbars (3) being movable together or separately from each other along guides (201) extending parallel to said feeding direction by means of actuators (302) for displacing them;
- each crossbar (3) or some of said crossbars (3) being provided with support surfaces for the workpiece(s) (P) being processed;
- each crossbar (3) being provided with at least one positioning stop (303, 304) and/or retaining members (305, 308) of said workpiece (P) with respect to the longitudinal extension of said crossbar, which positioning stop and/or retaining members are movable respectively in the active position of interference and/or clamping of said workpiece and in the inactive position of interference and/or clamping of said workpiece;
- a control unit being provided to perform a control program wherein instructions are encoded to synchronously control at least said motorised roto-translating mechanisms associated with said at least one upper processing head (4), each of said actuators for moving said crossbars, and/or said positioning stops and/or said workpiece retaining members on said crossbars;
- each crossbar (3) or at least some of said crossbars (3) are movable to at least one predefined machining position with reference to said gantry (1) and said upper processing head (4);
- each crossbar (3) or at least some of said crossbar are provided with a translation guide (301) oriented parallel to the longitudinal extension of said corresponding crossbar (3), said guide (301) being positioned adjacent to said crossbar (3) and below the support surface of the workpiece (P) on said crossbar (3), i.e. below the side of the workpiece (P) facing said crossbar;
**characterised in that**:
- said gantry (1) also being provided with a lower processing head (5) and a parking station (50) for said lower processing head (5),
- said lower processing head (5) being provided with a cart or a slide (15) which can be engaged and disengaged from the said translation guide (301) provided on a crossbar (3);
- being provided with transferring devices of the said lower processing head (5) from said parking station (50) on the gantry (1) to the translation guide (301) of a crossbar (3) positioned at said parking station (50) and in an engaged condition of the cart or of the slide (15) on said translation guide (301) or vice versa;
- said lower processing head (5), or said cart or said slide (15) and/or said guide (301) being provided with a motorised actuator for translating said lower processing head (5) along said translation guide;
- said translation guide (301) associated with said crossbars (3) being provided at a level with respect to the side of the workpiece (P) to be machined such that the lower processing head (5) moves underneath or behind said side for performing the processing movements of the workpiece (P) on said side;
- said control program containing instructions to make said control unit suitable for performing said actions.

2. Machine according to claim 1, wherein said parking station (50) of said lower processing head (5) comprises a translation guide (501) which is substantially identical to the translation guide (301) provided on said crossbars and which is provided oriented parallel to the translation guide (301) of said crossbars (3) and it is in a vertical position, substantially coinciding or aligned, with the translation guide (301) of said crossbars (3) respectively positioned in said machining position, while in said machining position of said crossbar (3) with respect to said parking station (50), said translation guide (501) associated with said gantry (1) forms an extension of the translation guide (301) provided on said crossbars (3);
- said lower processing head (5) being mounted on said translation guide (501) of said parking station (50) by means of said cart or slide (15), and said cart or said slide defining said transferring member of said said lower processing head (5), whereby said processing head automatically passes, upon command of the control unit, from said translation guide (501) of said parking station (50) to said translation guide (301) on said crossbar (3) when said crossbar is positioned at said parking station (50) or, at the end of said processing, from said translation guide (301) of the crossbar (3) to the translation guide (501) of the parking station (50), while during the processing o5f the workpiece (P), said lower processing head (5) may move underneath the support side of said workpiece on the crossbars (3) in order to process the workpiece at said support side.

3. Machine according to claim 1 or 2, wherein said lower processing head (5) can be mounted on the cart (15) by means of a roto-translating mechanism of said cart with respect to said crossbar (3), and wherein said mechanism comprises one or more guiding units allowing said processing head to perform relative translating movements with respect to the workpiece (P) to be machined and/or with respect to the crossbar (3) on whose guide (301) is mounted according to one or more non-parallel axes of translating and according to one or more axes of rotation, which may also partially coincide with at least one of the axes of translating, each translating and/or rotation guide unit being provided with a motorised translating and/or rotation actuator and said roto-translating mechanism being also assembled on the cart or on the slide (15) of said lower processing head (5) and interposed between said cart and/or said slide (15) and said lower processing head (5).

4. Machine according to one or more of the preceding claims, wherein the translation guide (301) of each crossbar (3), in combination with the cart or slide (15) associated with said lower processing head (5) and the motorised actuator for traversing said cart or said slide (15) along said guide (301), defines a guiding unit of the roto-translating mechanism of the said lower processing head (5) for translating said processing head along an axis parallel to the longitudinal direction of said crossbar (3), during processing.

5. Machine according to any one or more of the preceding claims, wherein for a workpiece (P) to be machined having a predetermined length in the processing direction, there are at least three crossbars (3) arranged at predetermined distances from each other and forming the support surface of a workpiece (P) to be machined, the distance between the first and the last of the crossbars (3) being set manually or automatically equal to or smaller than the size of the workpiece (P) in the translating direction of the crossbars (3), wherein the workpiece (P) to be machined rests on said at least three crossbars (3), while the positioning stops (303) and/or the retaining members (305) of the crossbar (3) which is positioned in the machining station and on the guide (301) on which the said lower processing head (5) is present, whereby said crossbar (3) can perform relative traversing movements with respect to the workpiece (P) in a direction transverse to its longitudinal extension defining the translation guides (201) of the crossbar (3) in the feeding direction of the workpiece (P) with respect to the machining station and the motorised translating actuator of the corresponding crossbar (3) a guiding unit of the roto-translating mechanism of the lower processing head (5) with respect to the workpiece (P) to be machined in an incidental direction, preferably perpendicular to the longitudinal extension of the crossbar (3).

6. Machine according to claim 4 or 5, wherein said lower processing head (5) is fixed on the cart or on the slide (15) by means of only one translation guiding unit in a direction incidental to the workpiece (P) to be machined, in particular in a direction perpendicular to the plane defined by the processing direction of the workpiece (P) and the longitudinal extension of the crossbars (3).

7. Machine according to any one or more of the preceding claims, wherein the gantry (1) comprises, in addition to the said lower processing head (5) intended to operate on the side or sides of the workpiece facing the crossbar(s) (3), at least one further processing head (4) intended to operate on at least one or on at least some or all sides of the workpiece (P) which are not facing the crossbar(s) (3).

8. Machine according to one or more of the preceding claims, wherein each or at least one of the crossbar presents at least two translation guides which are parallel to each other and each intended to carry a different lower processing head (5) either simultaneously or alternately with each other and/or alternately or in combination wherein
the parking station (50) has two or more parking areas each intended for parking a different lower processing head (5), said parking areas being movable in the transfer position of the corresponding lower processing head (5) on the or on one of the translation guides (301) of a crossbar (3).

9. Machine according to one or more of the preceding claims, wherein a parking station (50) of a lower processing head (5) is provided, said stations being arranged in side-by-side positions at a respective end of the or of one of the translation guides (301) associated with a crossbar (3).

10. Machine according to any one or more of the preceding claims, wherein the retaining members (305) of the workpiece (P) to be machined on the crossbars (3), or on at least some of the crossbars, may comprise two workpiece (P) positioning stops relative to the longitudinal extension of the traverse and which are intended to cooperate with opposing sides of the workpiece (P) to be machined at least one of which stop is stationary and defines a fixed reference position of the workpiece relative to the longitudinal extension of the corresponding crossbar, while the second stop is movable along the longitudinal axis of the corresponding crossbar (3) in the approach to the facing side of the workpiece (P) in the condition of clamping the workpiece (P) against the stationary stop and in the direction of moving away to free the workpiece (P), by means of motorised actuators.

11. Machine according to any one or more of the preceding claims, wherein said retaining members (305) of the workpiece (P) on or to the crossbars (3) comprise one or more vacuum retaining members, or suction cups, cooperating at least with the side(s) of the workpiece facing a crossbar (3), optionally at least some of the vacuum retaining members (305) being movable, relatively and separately from each other or together with the other retaining members, along the longitudinal extension of the crossbar (3).

12. Machine according to one or more of the preceding claims, wherein each of the crossbars, or at least some of the crossbars (3), is associated with a motorized workpiece displacer in the direction of the longitudinal axis of the crossbar (3), which motorised workpiece displacer is coupled and uncoupled alternatively to the workpiece (P) which is synchronously controlled with the movement of the crossbars (3) and/or the activation or deactivation of the positioning stops and/or the retaining members (305) when provided by the control unit, the control program executed by the control unit being provided with the instructions for performing said functions.

13. Machine according to claim 12, wherein said motorized workpiece displacer has a workpiece (P) transport surface, said transport surface being alternatively liftable in a contact position against a side of the workpiece (P) to be machined facing the crossbar (3) and lowerable in a contact position away from said side of the workpiece (P).

14. A machine according to one of the claims 12 or 13, wherein the motorized workpiece displacer comprises at least one continuous belt conveyor, which is oriented in the longitudinal direction of the corresponding crossbar and is deflected around end pulleys of which at least one is motorized, the belt preferably extending along the entire length of the crossbar (3) and said belt being alternately movable in a contact position against a side of the workpiece (P) facing the crossbar (3) and in a spaced position from said side of the workpiece.

15. Machine according to one or more of the preceding claims, wherein at least one of the processing heads (4, 5), preferably each of the processing heads comprises an electro-spindle with an automatic tool changing system.

16. Workpiece machining method of variable size and shape, such as beams, slabs, panels and the like and in particular wood or similar materials, with a machine according to one or more of the preceding claims, wherein the method comprises the following steps:
- loading the workpiece (P) to be machined onto the feeding conveyor said workpiece to a processing station;
- activating on one or more crossbars (3) at least one positioning stop (303) of the workpiece and moving in the longitudinal direction of the crossbars (3) the workpiece to be machined into a stop position against said positioning stop (303);
- optionally activating the retaining members (305) of the workpiece (P) on one or more crossbars (3);
- moving the workpiece (P) to be machined by means of the crossbars (3) in the machining station to the machining position of the workpiece (P) itself relative to the processing head(s) (4, 5);
- translating a crossbar (3) separately from the workpiece (P) by deactivating when optionally provided and/or translating said crossbar (3) together with the workpiece (P) in the picking up position of a lower processing head (5) from a parking guide (501) to a translation guide (301) of the said lower processing head (5) along said crossbar (3);
- activating the said lower processing head (5) for performing of the machining operations by allowing the said lower processing head (5) to move along said crossbar (3).

## Patentansprüche

1. Werkstückbearbeitungsmaschine für Balken, Platten, Paneele und dergleichen, wobei die Maschine umfasst:
- wenigstens eine Bearbeitungsstation mit wenigstens einem Portal, das wenigstens einen oberen Prozesskopf (4) trägt, wobei der Prozesskopf entlang wenigstens zweier zueinander nicht paralleler Achsen bewegbar und/oder um wenigstens eine oder wenigstens zwei zueinander nicht parallele Achsen mittels motorisierter Dreh-Schiebemechanismen drehbar ist;
- einen Förderer (2, 3) zum Zuführen mindestens eines Werkstücks (P) von einer Ladestation zu der Bearbeitungsstation (1);
- wobei der Förderer Vorrichtungen zum Bewegen eines Werkstücks (P) entlang einer Bahn
in einer Bearbeitungsrichtung zu dem Portal (1) hin und/oder durch dieses hindurch und/oder von diesem weg umfasst;
- wobei der Förderer eine Vielzahl von Träger-Querstangen (3) für das Werkstück (P) umfasst, die nebeneinander entlang der Bahn verteilt sind und quer zur Bearbeitungsrichtung des Werkstücks ausgerichtet sind und jeweils in einem vorbestimmten Abstand von benachbarten Querstangen (3) positioniert oder positionierbar sind;
- wobei die Querstangen (3) gemeinsam oder getrennt voneinander entlang von parallel zur Zuführrichtung verlaufender Führungen (201) mit Hilfe von zu ihrer Verschiebung dienenden Aktuatoren (302) bewegbar sind;
- wobei jede Querstange (3) oder einige der Querstangen (3) mit Tragflächen für das/die zu bearbeitende(n) Werkstück(e) (P) versehen sind;
- wobei jede Querstange (3) mit mindestens einem Positionierungsanschlag (303, 304) und/oder Halteelementen (305, 308) des Werkstücks (P) in Bezug auf die Längserstreckung der Querstange versehen ist, wobei die Positionierungsanschläge und/oder Halteelemente jeweils in die aktive Eingriffs- und/oder Klemmposition des Werkstücks und in die inaktive Eingriffs- und/oder Klemmposition des Werkstücks bewegbar sind;
- eine Steuereinheit zur Ausführung eines Steuerprogramms, in dem Anweisungen codiert sind zur synchronen Steuerung zumindest der mit dem zumindest einen oberen Prozesskopf (4) verbundenen motorisierten Dreh-Schiebemechanismen, jedes der Aktuatoren zum Bewegen der Querstangen und/oder der Positionierungsanschläge und/oder der Werkstückhalteelemente an den Querstangen;
- jede Querstange (3) oder zumindest einige der Querstangen (3) in Bezug auf das Portal (1) und den oberen Prozesskopf (4) in mindestens eine vordefinierte Bearbeitungsposition bewegbar sind;
- jede Querstange (3) oder zumindest einige der Querstangen mit einer parallel zur Längserstreckung der entsprechenden Querstange (3) ausgerichteten Translationsführung (301) versehen sind, wobei die Führung (301) benachbart zur Querstange (3) und unterhalb der Tragfläche des Werkstücks (P) auf der Querstange (3) angeordnet ist, d. h. unterhalb der der Querstange zugewandten Seite des Werkstücks (P);
**dadurch gekennzeichnet, dass**
- das Portal (1) außerdem mit einem unteren Prozesskopf (5) und einer Parkstation (50) für den unteren Prozesskopf (5) versehen ist,
- der untere Prozesskopf (5) mit einem Wagen oder Schlitten (15) versehen ist, der mit der an einer Querstange (3) vorgesehenen Translationsführung (301) in Eingriff gebracht und von dieser gelöst werden kann;
- wobei Vorrichtungen zum Umsetzen des unteren Prozesskopfes (5) von der Parkstation (50) auf dem Portal (1) zu der Translationsführung (301) einer in der Parkstation (50) angeordneten Querstange (3) sowie in einem Eingriffszustand des Wagens oder des Schlittens (15) auf der Translationsführung (301) oder umgekehrt vorgesehen sind;
- wobei der untere Prozesskopf (5) oder der Wagen oder der Schlitten (15) und/oder die Führung (301) mit einem motorisierten Aktuator versehen sind, um den unteren Prozesskopf (5) entlang der Translationsführung zu verfahren;
- wobei die den Querstangen (3) zugeordnete Translationsführung (301) in einer Höhe in Bezug auf die zu bearbeitende Seite des Werkstücks (P) derart angeordnet ist, dass sich der untere Prozesskopf (5) zum Ausführen der Bearbeitungsbewegungen des Werkstücks (P) an dieser Seite unterhalb oder hinter dieser Seite bewegt;
- wobei das Steuerprogramm Anweisungen enthält, die die Steuereinheit zur Ausführung der genannten Aktionen geeignet machen.

2. Maschine nach Anspruch 1, wobei die Parkstation (50) des unteren Prozesskopfes (5) eine Translationsführung (501) umfasst, die im Wesentlichen identisch mit der an den Querstangen vorgesehenen Translationsführung (301) ist und die parallel zur Translationsführung (301) der Querstangen (3) ausgerichtet und in einer vertikalen Position angeordnet ist, die im Wesentlichen mit der Translationsführung (301) der jeweils in der Bearbeitungsposition positionierten Querstangen (3) übereinstimmt oder ausgerichtet ist,
während in der Bearbeitungsposition der Querstange (3) in Bezug auf die Parkstation (50) die dem Portal (1) zugeordnete Translationsführung (501) eine Verlängerung der an den Querstangen (3) vorgesehenen Translationsführung (301) bildet;
- wobei der untere Prozesskopf (5) mittels des Wagens oder Schlittens (15) an der Translationsführung (501) der Parkstation (50) montiert ist und der Wagen oder Schlitten das Umsetzungselement des unteren Prozesskopfes (5) definiert, wobei der Prozesskopf auf Befehl der Steuereinheit automatisch von der Translationsführung (501) der Parkstation (50) zur Translationsführung (301) an der Querstange (3) übergeht, wenn die Querstange im Bereich der Parkstation (50) angeordnet ist, oder, am Ende des Prozesses, von der Translationsführung (301) der Querstange (3) zur Translationsführung (501) der Parkstation (50) übergeht, während bei der Bearbeitung des Werkstücks (P) der untere Prozesskopf (5) sich unterhalb der Tragseite des Werkstücks auf den Querstangen (3) bewegen kann, um das Werkstück an dieser Tragseite zu bearbeiten.

3. Maschine nach Anspruch 1 oder 2, wobei der untere Prozesskopf (5) mittels eines Dreh-Schiebemechanismus des Wagens in Bezug auf die Querstange (3) auf dem Wagen (15) montiert werden kann, und wobei der Mechanismus eine oder mehrere Führungseinheiten umfasst, die es dem Prozesskopf ermöglichen, relative Translationsbewegungen in Bezug auf das zu bearbeitende Werkstück (P) und/oder in Bezug auf die Querstange (3) auszuführen, auf deren Führung (301) dieser montiert ist, gemäß einer oder mehreren nicht parallelen Translationsachsen und gemäß einer oder mehreren Drehachsen, die auch teilweise mit mindestens einer der Translationsachsen übereinstimmen können, wobei jede Translations- und/oder Drehführungseinheit mit einem motorisierten Translations- und/oder Drehaktuator versehen ist, und wobei der Dreh-Schiebemechanismus ebenfalls auf dem Wagen oder auf dem Schlitten (15) des unteren Prozesskopfes (5) montiert ist und zwischen dem Wagen und/oder dem Schlitten (15) und dem unteren Prozesskopf (5) zwischengeschaltet ist.

4. Maschine nach einem oder mehreren der vorstehenden Ansprüche, wobei die Translationsführung (301) jeder Querstange (3) in Kombination mit dem Wagen oder Schlitten (15), der dem unteren Prozesskopf (5) und dem motorisierten Aktuator zum Verschieben des Wagens oder Schlittens (15) entlang der Führung (301) zugeordnet ist, eine Führungseinheit des Dreh-Schiebemechanismus des unteren Prozesskopfs (5) zum Verschieben des Prozesskopfs entlang einer Achse parallel zur Längsrichtung der Querstange (3) während der Verarbeitung definiert.

5. Maschine nach einem oder mehreren der vorstehenden Ansprüche, wobei für ein zu bearbeitendes Werkstück (P) mit einer vorbestimmten Länge in der Bearbeitungsrichtung mindestens drei Querstangen (3) vorgesehen sind, die in vorbestimmten Abständen voneinander angeordnet sind und die Tragfläche für ein zu bearbeitendes Werkstück (P) bilden, wobei der Abstand zwischen der ersten und der letzten Querstange (3) manuell oder automatisch auf einen Wert eingestellt wird, der gleich oder kleiner als die Größe des Werkstücks (P) in der Verschieberichtung der Querstangen (3) ist, wobei das zu bearbeitende Werkstück (P) auf den mindestens drei Querstangen (3) aufliegt, während die Positionieranschläge (303) und/oder die Halteelemente (305) der Querstange (3), die in der Bearbeitungsstation angeordnet ist und auf deren Führung (301) sich der untere Prozesskopf (5) befindet, wobei die Querstange (3) relative Querbewegungen in Bezug auf das Werkstück (P) in einer Richtung quer zu ihrer Längserstreckung ausführen kann, wobei die Translationsführungen (201) der Querstange (3) in der Vorschubrichtung des Werkstücks (P) in Bezug auf die Bearbeitungsstation und der motorisierte Translationsaktuator der entsprechenden Querstange (3) eine Führungseinheit des Dreh-Schiebemechanismus des unteren Prozesskopfes (5) in Bezug auf das zu bearbeitende Werkstück (P) in einer Einfallrichtung, vorzugsweise senkrecht zur Längserstreckung der Querstange (3), definieren.

6. Maschine nach Anspruch 4 oder 5, wobei der untere Prozesskopf (5) an dem Wagen oder an dem Schlitten (15) befestigt ist, nur mittels einer Translationsführungseinheit in einer in Bezug auf das zu bearbeitende Werkstück (P) einfallenden Richtung, insbesondere in einer Richtung senkrecht zu der durch die Bearbeitungsrichtung des Werkstücks (P) und die Längserstreckung der Querstangen (3) definierten Ebene, .

7. Maschine gemäß einem oder mehreren der vorstehenden Ansprüche, wobei das Portal (1) zusätzlich zu dem unteren Prozesskopf (5), der zur Bearbeitung der der Querstange (3) zugewandten Seite(n) des Werkstücks bestimmt ist, wenigstens einen weiteren Prozesskopf (4) umfasst, der zur Bearbeitung wenigstens einer oder wenigstens einiger oder aller der/n Querstange(n) (3) nicht zugewandten Seiten des Werkstücks (P) bestimmt ist.

8. Maschine nach einem oder mehreren der vorstehenden Ansprüche, wobei jede oder mindestens eine der Querstangen wenigstens zwei zueinander parallele Translationsführungen aufweist, die zum Tragen jeweils eines anderen unteren Prozesskopfes (5) entweder gleichzeitig oder abwechselnd zueinander und/oder wechselweise oder in Kombination vorgesehen sind, wobei
die Parkstation (50) zwei oder mehr Parkbereiche aufweist, die jeweils zum Parken eines anderen unteren Prozesskopfes (5) bestimmt sind, wobei die Parkbereiche in die Umsetzposition des entsprechenden unteren Prozesskopfes (5) auf der oder einer der Translationsführungen (301) einer Querstange (3) bewegbar sind.

9. Maschine nach einem oder mehreren der vorstehenden Ansprüche, wobei eine Parkstation (50) eines unteren Prozesskopfes (5) vorgesehen ist, wobei die Stationen in Nebeneinanderpositionen an einem jeweiligen Ende der oder einer der Translationsführungen (301) angeordnet sind, die einer Querstange (3) zugeordnet sind.

10. Maschine nach einem oder mehreren der vorstehenden Ansprüche, wobei die Halteelemente (305) des zu bearbeitenden Werkstücks (P) an den Querstangen (3) oder zumindest auf einigen der Querstangen, zwei Werkstück (P)-Positionierungsanschläge relativ zur Längserstreckung der Querstange umfassen können, die dazu bestimmt sind, mit gegenüberliegenden Seiten des zu bearbeitenden Werkstücks (P) zusammenzuwirken, wobei zumindest einer dieser Anschläge stationär ist und eine feste Referenzposition des Werkstücks relativ zur Längserstreckung der entsprechenden Querstange definiert, während der zweite Anschlag entlang der Längsachse der entsprechenden Querstange beweglich ist (3) bei der Annäherung an die zugewandte Seite des Werkstücks (P) in dem Zustand des Festklemmens des Werkstücks (P) gegen den stationären Anschlag und in der Richtung des Wegbewegens zum Freigeben des Werkstücks (P) mittels motorisierter Aktuatoren.

11. Maschine nach einem oder mehreren der vorstehenden Ansprüche, wobei die Halteelemente (305) des Werkstücks (P) auf oder an den Querstangen (3) ein oder mehrere Vakuumhalteelemente oder Saugnäpfe umfassen, die zumindest mit der/den Seite(n) des Werkstücks zusammenwirken, die einer Querstange (3) zugewandt ist/sind, wobei optional mindestens einige der Vakuumhalteelemente (305) relativ zueinander und getrennt voneinander oder zusammen mit den anderen Halteelementen entlang der Längserstreckung der Querstange (3) bewegbar sind.

12. Maschine nach einem oder mehreren der vorstehenden Ansprüche, wobei jede der Querstangen oder zumindest einige der Querstangen (3) mit einem motorisierten Werkstückversteller in Richtung der Längsachse der Querstange (3) zugeordnet ist, wobei der motorisierte Werkstückversteller wechselweise mit dem Werkstück (P) gekoppelt und entkoppelt wird, das synchron mit der Bewegung der Querstangen (3) und/oder der Aktivierung oder Deaktivierung der Positionierungsanschläge und/oder der Halteelemente (305) gesteuert wird, wenn diese von der Steuereinheit vorgesehen sind, wobei das von der Steuereinheit ausgeführte Steuerprogramm mit den Anweisungen zur Ausführung dieser Funktionen versehen ist.

13. Maschine nach Anspruch 12, wobei der motorisierte Werkstückversteller eine Werkstücktransportfläche (P) aufweist, wobei die Transportfläche wechselweise in eine Kontaktposition gegen eine der Querstange (3) zugewandte Seite des zu bearbeitenden Werkstücks (P) hebbar und in eine Kontaktposition von der Seite des Werkstücks (P) weg absenkbar ist.

14. Maschine nach einem der Ansprüche 12 oder 13, wobei der motorisierte Werkstückversteller mindestens einen Endlosbandförderer umfasst, der in Längsrichtung der entsprechenden Querstange ausgerichtet ist und um Endrollen umgelenkt wird, von denen mindestens eine motorisiert ist, wobei sich das Band vorzugsweise über die gesamte Länge der Querstange (3) erstreckt und das Band abwechselnd in eine Kontaktposition gegen eine der Querstange (3) zugewandte Seite des Werkstücks (P) und in eine von dieser Seite des Werkstücks beabstandete Position bewegbar ist.

15. Maschine nach einem oder mehreren der vorstehenden Ansprüche, wobei mindestens einer der Prozessköpfe (4, 5), vorzugsweise jeder der Prozessköpfe, eine Elektrospindel mit einem automatischen Werkzeugwechselsystem umfasst.

16. Verfahren zur Bearbeitung von Werkstücken mit variablen Abmessungen und Form, wie beispielsweise Balken, Platten, Paneele und dergleichen, insbesondere aus Holz oder ähnlichen Materialien, mit einer Maschine nach einem oder mehreren der vorstehenden Ansprüche, wobei das Verfahren folgende Schritte umfasst:
- Laden des zu bearbeitenden Werkstücks (P) auf den Zuführförderer, der das Werkstück zu einer Bearbeitungsstation zuführt;
- Aktivieren wenigstens eines Positionierungsanschlags (303) des Werkstücks an einer oder mehreren Querstangen (3) und Bewegen des zu bearbeitenden Werkstücks in Längsrichtung der Querstangen (3) in eine Anschlagposition gegen den Positionierungsanschlag (303);
- optionales Aktivieren der Halteelemente (305) des Werkstücks (P) an einer oder mehreren Querstangen (3);
- Bewegen des zu bearbeitenden Werkstücks (P) mittels der Querstangen (3) in der Bearbeitungsstation zu der Bearbeitungsposition des Werkstücks (P) selbst relativ zu dem/den Prozesskopf(en) (4, 5);
- Verfahren einer Querstange (3) getrennt vom Werkstück (P) durch Deaktivierung, falls optional vorgesehen, und/oder Verfahren der Querstange (3) zusammen mit dem Werkstück (P) in der Aufnahmeposition eines unteren Prozesskopfes (5) von einer Parkführung (501) zu einer Translationsführung (301) des unteren Prozesskopfes (5) entlang der Querstange (3);
- Aktivieren des unteren Prozesskopfes (5) zur Durchführung der Bearbeitungsvorgänge, indem dem unteren Prozesskopf (5) ermöglicht wird sich entlang der Querstange (3) zu bewegen.

## Revendications

1. Machine de traitement des pièces telles que poutres, plaques, panneaux et similaires, laquelle machine comprend:
- au moins une station d'usinage comprenant au moins un portique (1) supportant au moins une tête de traitement supérieure (4), où la tête de traitement peut être déplacée le long d'au moins deux axes non parallèles entre eux et/ou rotative autour d'au moins un ou d'au moins deux axes non parallèles entre eux au moyen de mécanismes de rotation-translation motorisés;
- un convoyeur (2, 3) pour alimenter au moins une pièce (P) d'une station de chargement à ladite station d'usinage (1);
- où ledit convoyeur comprend des dispositifs pour déplacer une pièce (P) le long d'un parcours dans une direction de traitement vers et/ou à travers et/ou en s'éloignant dudit portique (1);
- ledit convoyeur comprenant une pluralité de barres transversales (3) de support de ladite pièce (P) qui sont réparties côte à côte le long dudit parcours et qui sont orientées transversalement à ladite direction de traitement de ladite pièce et sont ou peuvent être positionnées chacune à une distance prédéterminée des barres transversales adjacentes (3);
- lesdites barres transversales (3) pouvant être déplacées ensemble ou séparément les unes des autres le long de guides (201) qui s'étendent parallèlement à ladite direction d'alimentation au moyen d'actionneurs (302) destinés à les déplacer;
- chaque barre transversale (3) ou certaines desdites barres transversales (3) étant pourvues de surfaces de support pour la ou les pièces (P) en cours de traitement;
- chaque barre transversale (3) étant pourvue d'au moins une butée de positionnement (303, 304) et/ou d'éléments de retenue (305, 308) de ladite pièce (P) par rapport à l'extension longitudinale de ladite barre transversale, lesquels butée de positionnement et/ou éléments de retenue peuvent être déplacés respectivement dans la position active d'interférence et/ou de serrage de ladite pièce et dans la position inactive d'interférence et/ou de serrage de ladite pièce;
- étant prévu une unité de commande pour exécuter un programme de commande dans lequel sont codées des instructions pour commander de manière synchrone au moins lesdits mécanismes motorisés de rotation-translation associés à ladite au moins une tête de traitement supérieure (4), chacun desdits actionneurs pour déplacer lesdites barres transversales, et/ou lesdites butées de positionnement et/ou lesdits éléments de retenue de la pièce sur lesdites barres transversales;
- chaque barre transversale (3) ou au moins certaines desdites barres transversales (3) peuvent être déplacées vers au moins une position d'usinage prédéfinie par rapport audit portique (1) et à ladite tête de traitement supérieure (4);
- chaque barre transversale (3) ou au moins certaines desdites barres transversales sont pourvues d'un guide de translation (301) orienté parallèlement à l'extension longitudinale de ladite barre transversale correspondante (3), ledit guide (301) étant positionné à côté de ladite barre transversale (3) et sous la surface de support de la pièce (P) sur ladite barre transversale (3), c'est-à-dire sous le côté de la pièce (P) qui fait face à ladite barre transversale;
**caractérisée en ce que**:
- ledit portique (1) étant également pourvu d'une tête de traitement inférieure (5) et d'une station de stationnement (50) pour ladite tête de traitement inférieure (5),
- ladite tête de traitement inférieure (5) étant pourvue d'un chariot ou d'un coulisseau (15) qui peuvent être engagés et désengagés dudit guide de translation (301) prévu sur une barre transversale (3);
- étant pourvus des dispositifs de transfert de ladite tête de traitement inférieure (5) depuis ladite station de stationnement (50) sur le portique (1) au guide de translation (301) d'une barre transversale (3) positionnée au niveau de ladite station de stationnement (50) et dans une condition d'engagement du chariot ou du coulisseau (15) sur ledit guide de translation (301) ou vice-versa;
- ladite tête de traitement inférieure (5), ou ledit chariot ou ledit coulisseau (15) et/ou ledit guide (301) étant pourvus d'un actionneur motorisé pour la translation de ladite tête de traitement inférieure (5) le long dudit guide de translation;
- ledit guide de translation (301) associé auxdites barres transversales (3) étant prévu, par rapport au côté de la pièce (P) à usiner, à un niveau tel que la tête de traitement inférieure (5) se déplace sous ou derrière ledit côté pour effectuer les mouvements de traitement de la pièce (P) sur ledit côté;
- ledit programme de commande contenant des instructions pour rendre ladite unité de commande apte à effectuer lesdites actions.

2. Machine selon la revendication 1, où ladite station de stationnement (50) de ladite tête de traitement inférieure (5) comprend un guide de translation (501) qui est sensiblement identique au guide de translation (301) prévu sur lesdites barres transversales et qui est prévu orienté parallèlement au guide de translation (301) desdites barres transversales (3) et il est dans une position verticale, sensiblement coïncidant ou aligné avec le guide de translation (301) desdites barres transversales (3) respectivement positionnées dans ladite position d'usinage, tandis que, dans ladite position d'usinage de ladite barre transversale (3) par rapport à ladite station de stationnement (50), ledit guide de translation (501) associé audit portique (1) forme un prolongement du guide de translation (301) prévu sur lesdites barres transversales (3);
- ladite tête de traitement inférieure (5) étant montée sur ledit guide de translation (501) de ladite station de stationnement (50) au moyen dudit chariot ou coulisseau (15), et ledit chariot ou ledit coulisseau définissant ledit élément de transfert de ladite tête de traitement inférieure (5), de sorte que ladite tête de traitement passe automatiquement, sur commande de l'unité de commande, dudit guide de translation (501) de ladite station de stationnement (50) audit guide de translation (301) sur ladite barre transversale (3) lorsque ladite barre est positionnée au niveau de ladite station de stationnement (50) ou, à la fin dudit traitement, dudit guide de translation (301) de la barre transversale (3) au guide de translation (501) de la station de stationnement (50), tandis que, pendant le traitement de la pièce (P), ladite tête de traitement inférieure (5) peut se déplacer sous le côté de support de ladite pièce sur les barres transversales (3) afin de traiter la pièce au niveau dudit côté de support.

3. Machine selon la revendication 1 ou 2, où ladite tête de traitement inférieure (5) peut être montée sur le chariot (15) au moyen d'un mécanisme de rotation-translation dudit chariot par rapport à ladite barre transversale (3), et où ledit mécanisme comprend une ou plusieurs unités de guidage qui permettent à ladite tête de traitement d'effectuer des mouvements de translation relatifs par rapport à la pièce (P) à usiner et/ou par rapport à la barre transversale (3) sur le guide (301) de laquelle elle est montée selon un ou plusieurs axes de translation non parallèles et selon un ou plusieurs axes de rotation, qui peuvent aussi coïncider partiellement avec au moins l'un des axes de translation, chaque unité de guidage de translation et/ou de rotation étant pourvue d'un actionneur motorisé de translation et/ou de rotation, et ledit mécanisme de rotation-translation étant lui aussi assemblé sur le chariot ou sur le coulisseau (15) de ladite tête de traitement inférieure (5) et interposé entre ledit chariot et/ou ledit coulisseau (15) et ladite tête de traitement inférieure (5).

4. Machine selon une ou plusieurs des revendications précédentes, où le guide de translation (301) de chaque barre transversale (3), en combinaison avec le chariot ou le coulisseau (15) associé à ladite tête de traitement inférieure (5) et avec l'actionneur motorisé pour déplacer en translation ledit chariot ou ledit coulisseau (15) le long dudit guide (301), définit une unité de guidage du mécanisme de rotation-translation de ladite tête de traitement inférieure (5) pour translater ladite tête de traitement le long d'un axe parallèle à la direction longitudinale de ladite barre transversale (3), pendant le traitement.

5. Machine selon l'une ou plusieurs des revendications précédentes, où, pour une pièce (P) à usiner ayant une longueur prédéterminée dans la direction de traitement, il y a au moins trois barres transversales (3) disposées à des distances prédéterminées les unes des autres et formant la surface de support d'une pièce (P) à usiner, la distance entre la première et la dernière des barres transversales (3) étant réglée manuellement ou automatiquement de manière à être égale ou inférieure à la taille de la pièce (P) dans la direction de translation des barres transversales (3), où la pièce (P) à usiner repose sur lesdites au moins trois barres transversales (3), tandis que les butées de positionnement (303) et/ou les éléments de retenue (305) de la barre transversale (3) qui est positionnée dans la station d'usinage et sur le guide (301) sur lequel se trouve ladite tête de traitement inférieure (5), de sorte que ladite barre transversale (3) peut effectuer des mouvements de déplacement en translation relatifs par rapport à la pièce (P) dans une direction transversale à son extension longitudinale définissant les guides de translation (201) de la barre transversale (3) dans la direction d'alimentation de la pièce (P) par rapport à la station d'usinage et l'actionneur de translation motorisé de la barre transversale correspondante (3), une unité de guidage du mécanisme de rotation-translation de la tête de traitement inférieure (5) par rapport à la pièce (P) à usiner dans une direction incidente, de préférence perpendiculaire à l'extension longitudinale de la barre transversale (3).

6. Machine selon la revendication 4 ou 5, où ladite tête de traitement inférieure (5) est fixée sur le chariot ou sur le coulisseau (15) au moyen d'une seule unité de guidage en translation dans une direction incidente à la pièce (P) à usiner, en particulier dans une direction perpendiculaire au plan défini par la direction de traitement de la pièce (P) et par l'extension longitudinale des barres transversales (3).

7. Machine selon une quelconque ou plusieurs des revendications précédentes, où le portique (1) comprend, outre ladite tête de traitement inférieure (5) destinée à opérer sur le ou les côtés de la pièce faisant face à la ou aux barres transversales (3), au moins une autre tête de traitement (4) destinée à opérer sur au moins un ou sur au moins certains ou tous les côtés de la pièce (P) qui ne font pas face à la ou aux barres transversales (3).

8. Machine selon l'une ou plusieurs des revendications précédentes, où chaque barre transversale ou au moins l'une d'entre elles présente au moins deux guides de translation parallèles l'un à l'autre et destinés à porter chacun une tête de traitement inférieure différente (5), simultanément ou alternativement l'un par rapport à l'autre et/ou alternativement ou en combinaison, où
la station de stationnement (50) présente deux ou plusieurs zones de stationnement, chacune étant destinée au stationnement d'une tête de traitement inférieure différente (5), lesdites zones de stationnement pouvant être déplacées dans la position de transfert de la tête de traitement inférieure correspondante (5) sur le ou sur l'un des guides de translation (301) d'une barre transversale (3).

9. Machine selon l'une ou plusieurs des revendications précédentes, où est prévue une station de stationnement (50) d'une tête de traitement inférieure (5), lesdites stations étant disposées côte à côte à une extrémité respective du ou de l'un des guides de translation (301) associés à une barre transversale (3).

10. Machine selon l'une ou plusieurs des revendications précédentes, où les éléments de retenue (305) de la pièce (P) à usiner sur les barres transversales (3), ou sur au moins certaines des barres transversales, peuvent comprendre deux butées de positionnement de la pièce (P) par rapport à l'extension longitudinale de la traverse et qui sont destinées à coopérer avec les côtés opposés de la pièce (P) à usiner, dont l'une au moins desdites butées est fixe et définit une position de référence fixe de la pièce par rapport à l'extension longitudinale de la barre transversale correspondante, tandis que la seconde butée peut être déplacée le long de l'axe longitudinal de la barre transversale correspondante (3) en s'approchant au côté faisant face de la pièce (P) en condition de serrage de la pièce (P) contre la butée fixe et dans la direction de l'éloignement pour libérer la pièce (P), à l'aide d'actionneurs motorisés.

11. Machine selon une ou plusieurs des revendications précédentes, où lesdits éléments de retenue (305) de la pièce (P) sur ou aux barres transversales (3) comprennent un ou plusieurs éléments de retenue à vide, ou ventouses, coopérant au moins avec le ou les côtés de la pièce faisant face à une barre transversale (3), éventuellement au moins certains des éléments de retenue à vide (305) pouvant être déplacés, relativement et séparément les uns des autres ou ensemble avec les autres éléments de retenue, le long de l'extension longitudinale de la barre transversale (3).

12. Machine selon l'une ou plusieurs des revendications précédentes, où chacune des barres transversales, ou au moins certaines des barres transversales (3), est associée à un dispositif motorisé de déplacement de la pièce dans la direction de l'axe longitudinal de la barre transversale (3), lequel dispositif motorisé de déplacement de la pièce est couplé et découplé alternativement à la pièce (P) qui est commandée de manière synchrone avec le mouvement des barres transversales (3) et/ou avec l'activation ou la désactivation des butées de positionnement et/ou des éléments de retenue (305) lorsqu'ils sont fournis par l'unité de commande, le programme de commande exécuté par l'unité de commande étant pourvu des instructions pour l'exécution desdites fonctions.

13. Machine selon la revendication 12, où le dispositif motorisé de déplacement de la pièce présente une surface de transport de la pièce (P), ladite surface de transport pouvant alternativement être soulevée dans une position de contact contre un côté de la pièce (P) à usiner faisant face à la barre transversale (3) et abaissée dans une position de contact espacée dudit côté de la pièce (P).

14. Machine selon une des revendications 12 ou 13,
où le dispositif motorisé de déplacement de la pièce comprend au moins un convoyeur à bande continue, qui est orienté dans la direction longitudinale de la barre transversale correspondante et dévié autour de poulies d'extrémité dont au moins une est motorisée, la bande s'étendant de préférence sur toute la longueur de la barre transversale (3) et ladite bande pouvant être déplacée alternativement dans une position de contact contre un côté de la pièce (P) faisant face à la barre transversale (3) et dans une position éloignée dudit côté de la pièce.

15. Machine selon une ou plusieurs des revendications précédentes, où au moins une des têtes de traitement (4, 5), de préférence chacune des têtes de traitement, comprend une broche électrique avec un système de changement d'outil automatique.

16. Méthode d'usinage de pièces de dimensions et de formes variables, telles que poutres, plaques, panneaux et similaires, en particulier en bois ou matériaux similaires, avec une machine selon une ou plusieurs des revendications précédentes, où la méthode comprend les étapes suivantes:
- charger la pièce (P) à usiner sur le convoyeur d'alimentation de ladite pièce vers une station de traitement;
- activer sur une ou plusieurs barres transversales (3) au moins une butée de positionnement (303) de la pièce et déplacer, dans la direction longitudinale des barres transversales (3), la pièce à usiner dans une position de butée contre ladite butée de positionnement (303);
- activer éventuellement les éléments de retenue (305) de la pièce (P) sur une ou plusieurs barres transversales (3);
- déplacer la pièce (P) à usiner au moyen des barres transversales (3) dans la station d'usinage jusqu'à la position d'usinage de la pièce (P) elle-même par rapport à la ou aux têtes de traitement (4, 5);
- translater une barre transversale (3) séparément de la pièce (P) en désactivant lorsque cela est prévu en option et/ou translater ladite barre transversale (3) avec la pièce (P) dans la position de prélèvement d'une tête de traitement inférieure (5) d'un guide de stationnement (501) à un guide de translation (301) de ladite tête de traitement inférieure (5) le long de ladite barre transversale (3);
- activer ladite tête de traitement inférieure (5) pour effectuer les opérations d'usinage en permettant à ladite tête de traitement inférieure (5) de se déplacer le long de ladite barre transversale (3).
